# EUROPÄISCHE PATENTSCHRIFT

(11) **EP 2 483 318 B1**
(45) Veröffentlichungstag und Bekanntmachung des Hinweises auf die Patenterteilung: **25.06.2014**
(21) Anmeldenummer: 10759637.1
(22) Anmeldetag: 28.09.2010
(51) Int. Cl.: C08F 2/24, C08F 212/08, D21H 17/34

(54) **FEINTEILIGE, STÄRKEHALTIGE POLYMERDISPERSIONEN, VERFAHREN ZU IHRER HERSTELLUNG UND VERWENDUNG ALS LEIMUNGSMITTEL IN DER PAPIERHERSTELLUNG**
FINELY DIVIDED STARCH-CONTAINING POLYMER DISPERSIONS, METHOD FOR THE PRODUCTION THEREOF AND USE THEREOF AS SIZING AGENT IN PAPER MANUFACTURING
DISPERSIONS POLYMÈRES À PARTICULES FINES, CONTENANT DE L'AMIDON, LEUR PROCÉDÉ DE FABRICATION ET LEUR UTILISATION EN TANT QUE PRODUIT D'ENCOLLAGE POUR LA FABRICATION DE PAPIER

(30) Priorität: 02.10.2009 EP 09172098
(43) Veröffentlichungstag der Anmeldung: 08.08.2012
(73) Patentinhaber: BASF SE, 67056 Ludwigshafen (DE)
(72) Erfinder: SONG, Anja, 68167 Mannheim (DE); KERN, Holger, 74912 Kirchardt (DE); ARNOLD, Petra, 69488 Birkenau (DE)
(74) Vertreter: Peatfield, Jeremy William
(86) Internationale Anmeldenummer: PCT/EP2010/064357
(87) Internationale Veröffentlichungsnummer: WO 2011/039185

(56) Entgegenhaltungen:
- WO-A1-2007/000420
- WO-A2-2004/078807
- US-A1- 2008 255 301

## Beschreibung

Die Erfindung betrifft feinteilige, stärkehaltige Polymerdispersionen, die erhältlich sind durch Emulsionspolymerisation von ethylenisch ungesättigten Monomeren in Gegenwart mindestens eines Redoxinitiators, Stärke und eines Terpen-haltigen Reglers, Verfahren zur Herstellung der Dispersionen und ihre Verwendung als Leimungs- und Beschichtungsmittel für Papier.

Aus EP 0 273 770 B1 und EP 0 257 412 B2 sind Leimungsmittel auf Basis feinteiliger, wässriger Dispersionen bekannt, die durch Copolymerisation von ethylenisch ungesättigten Monomeren wie Acrylnitril und (Meth)acrylsäureestern und gegebenenfalls bis zu 10 Gew.-% anderen Monomeren wie Styrol nach Art einer Emulsionspolymerisation in Gegenwart von Peroxidgruppen enthaltenden Initiatoren, insbesondere von Redoxinitiatoren, und abgebauter Stärke erhältlich sind. Die Verwendung von Polymerisationsreglern wie Terpenen wird in keiner der Schriften offenbart.

Aus der WO 99/42490 A1 sind ebenfalls wässrige, feinteilige Polymerdispersionen bekannt, die zur Oberflächenleimung von Papier, Pappe und Karton eingesetzt werden. Die Dispersionen sind erhältlich durch radikalisch initiierte Emulsionspolymerisation von ethylenisch ungesättigten Monomeren in Gegenwart von abgebauter Stärke mit einem zahlenmittlerern Molekulargewicht Mₙ von 500 bis 10 000. Die Monomeren bestehen aus (i) mindestens einem gegebenenfalls substituierten Styrol, (ii) mindestens einem (Meth)acrylsäure-C₁-C₄-alkylester sowie (iii) gegebenenfalls bis zu 10 Gew.-% anderen ethylenisch ungesättigten Monomeren. Die Polymerisation erfolgt in Gegenwart eines pfropfaktiven, wasserlöslichen Redoxsystems. Zur Einstellung des Molgewichts wird die Verwendung von Reglern aus der Gruppe der Mercaptane offenbart.

In WO 2002/14393 A1 ist ein Verfahren zur Herstellung von Polymerdispersionen offenbart, die als Leimungs- und Beschichtungsmittel verwendet werden. Diese Polymerdispersionenen sind durch Copolymerisation in Emulsion eines Monomerengemisches aus mindestens einem (Meth)acrylsäureester von einwertigen, gesättigten C₃-C₈-Alkoholen und mindestens eines weiteren ethylenisch ungesättigten Monomeren in Gegenwart von einer Stärke oder eines Stärkederivats sowie eines Peroxidgruppen enthaltenden Initiators erhältlich. Die Emulsionspolymerisation zeichnet sich dadurch aus, dass sowohl die Monomere als auch der Initiator kontinuierlich zudorsiert werden, wobei in einem ersten Zulaufzeitraum von 5 bis 60 Minuten eine erste Initiatormenge und in einem zweiten Zulaufzeitraum von 5 bis 180 Minuten eine zweite Initiatormenge, die kleiner ist als die erste Initiatormenge, zudosiert wird. Der Einsatz von Polymerisationsreglern ist nicht offenbart.

Feinteilige, stärkehaltige Polymerdispersionen als Leimungsmittel für Papier, Pappe und Karton sind auch aus WO 2007/000419 A1 bekannt. Diese sind erhältlich durch Emulsionspolymerisation im wässrigen Medium mit Redoxinitiatoren von ethylenisch ungesättigten Monomeren aus (i) mindestens eines gegebenenfalls substituierten Styrols, Methacrylsäuremethylesters, Acrylnitril und/oder Methacrylnitril, (ii) mindestens eines (Meth)acrylsäure-C₁-C₁₂-alkylesters und mindestens (iii) eines ethylenisch ungesättigten copolymerisierbaren Monomers in Gegenwart einer abgebauten, kationischen Stärke, die eine Molmasse M_{w} von 1 000 bis 65 000 g/mol hat. In der Offenbarung sind eine Vielzahl von Polymerisationsreglern enthalten, das erfindungsgemäße Beispiel wird jedoch ohne Regler durchgeführt.

WO 2007/000420 A1 offenbart ebenfalls feinteilige, wässrige, stärkehaltige Polymerdispersionen als Leimungsmittel für Papier, Pappe und Karton, die erhältlich sind durch radikalische Emulionspolymerisation von (i) mindestens eines gegebenenfalls substituierten Sytrols, Methacrylsäuremethylesters, Acrylnitril und/oder Methacrylnitril, (ii) mindestens eines (Meth)acrylsäure-C₁-C₄-alkylesters, (iii) mindestens eines (Meth)acrylsäure-C₅-C₂₂-alkylesters und (iv) gegebenenfalls mindestens eins anderen ethylenisch copoylmerisierbaren Monomers sowie (v) einer abgebauten Stärke mit einem Molmasse M_{w} von 1 000 bis 65 000 in Gegenwart eines Polymerisationsreglers. In der Beschreibung ist eine Vielzahl von potentiellen Reglern offenbart, jedoch ist tert.-Dodecylmerpatan der bevorzugte Poylmerisatuionsregler, der auch in allen Beispielen eingesetzt wird.

WO20041078807 beschreibt die Herstellung von wässrige Dispersion, und die Anwendung für Papier Herstellung. Solche Dispersion sind hergestellt durch Emulsionspolymerisation von radikalischen ungesättigten Verbindungen in Gegenwart von mindestens zwei unterschiedlichen Polymerisationsreglern, worin solche Polymerisationsreglern aus mindestens ein Terpinolen Verbindung bestehend.

Es besteht jedoch ein kontinuierlicher Bedarf in der Papierindustrie an neuen, wirksamen Masse- und Oberflächenleimungsmitteln für die Herstellung von Papier, Pappe und Karton.

Der vorliegenden Erfindung lag daher die Aufgabe zu Grunde, weitere feinteilige, stärkehaltige Polymerdispersionen zur Verfügung zu stellen, die gegenüber den bekannten Polymerdispersionen eine verbesserte Wirksamkeit als Leimungsmittel für Papier, Pappe und Karton haben.

Die Aufgabe wird erfindungsgemäß gelöst mit feinteiligen, stärkehaltigen Polymerdispersionen, die erhältlich sind durch radikalisch initiierte Emulsionspolymerisation von ethylenisch ungesättigten Monomeren in Gegenwart mindestens eines Redoxinitiators und Stärke, wobei man als ethylenisch ungesättigte Monomere
(a) 30 bis 60 Gew.-% mindestens eines gegebenenfalls substituierten Styrols,
(b) 1 bis 60 Gew.-% mindestens eines Acrylsäure-C₁-C₁₂-alkylesters und/oder Methacrylsäure-C₁-C₁₂-alkylesters,
(c) 0 bis 10 Gew.-% mindestens eines anderen ethylenisch ungesättigten copolymerisierbaren Monomers,
   und als Stärke
(d) 15 bis 40 Gew.-% mindestens einer abgebauten Stärke einsetzt, die eine Molmasse M_{w} von 1 000 bis 65 000 g/mol hat,
wobei die Summe (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, mindestens eines Terpen-haltigen Polymerisationsreglers durchgeführt wird.

Die erfindungsgemäßen feinteilige, stärkehaltigen Polymerdispersionen zeichnen sich durch eine im Hinblick auf den Stand der Technik signifikant erhöhte Leimungswirkung bei der Herstellung von Papier, Pappe und Karton aus.

Monomere der Gruppe (a) sind gegebenenfalls substituierte Styrole. Zu dieser Gruppe gehören Styrol und substituierte Styrole wie beispielsweise α-Methylstyrol, am Ring halogenierte Styrole wie Chlorstyrol oder C₁-C₄-alkyl-substituierte Styrole wie Vinyltoluol. Selbstverständlich können auch Mischungen von gegebenenfalls substituierten Styrolen eingesetzt werden. Bevorzugt eingesetztes Monomer dieser Gruppe ist Styrol, welches aus dieser Gruppe bevorzugt allein eingesetzt wird.

Die Monomere der Gruppe (a) sind zu 30 bis 60 Gew.-%, vorzugsweise zu 40 bis 50 Gew.-% in der Reaktionsmischung aus (a), (b), (c) und (d) enthalten.

Als Monomere der Gruppe (b) kommen sämtliche Ester der Acrylsäure und der Methacrylsäure in Betracht, die sich von einwertigen C₁-C₁₂-Alkoholen ableiten wie Methylacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, tert.-Butylacrylat, tert.-Butylmethacrylat, sek.-Butylacrylat, sek.-Butylmethacrylat, n-Pentylacrylat, n-Pentylmethacrylat, Neopentylacrylat, Neopentylmethacrylat, Cyclohexylacrylat, Cyclohexylmethacrylat, 2-Hexylacrylat, 2-Hexylmethacrylat, 2-Ethylhexylacrylat, 2-Ethylhexylmethacrylat, n-Octylacrylat, n-Octylmethacrylat, Isooctylacrylat, Isooctylmethacrylat, Decylacrylat und Decylmethacrylat, Dodecylacrylat, Dodecylmethacrylat, 2-Propylheptylacrylat und 2-Propylheptylmethacrylat. Bevorzugt eingesetzte Monomere dieser Gruppe sind Ester der Acrylsäure und Methacrylsäure von C₁-C₈-Allkoholen wie Methylacrylat, Ethylacrylat, n-Propylacrylat, Isopropylacrylat, n-Butylacrylat, sek.-Butylacrylat, Isobutylacrylat, tert.-Butylacrylat, Cyclohexylacrylat, 2-Ethylahexylacrylat und 2-Ethylhexylmethacrylat. Ganz besonders bevorzugt sind die Ester der Acrylsäure von C₁-C₄-Alkoholen wie n-Butylacrylat, sek.-Butylacrylat, Isobutylacrylat und tert.-Butylacrylat.

Erfindungsgemäß wird mindestens ein Acrylsäure-C₁-C₁₂-alkylester und/oder Methacrylsäure-C₁-C₁₂-alkylester als Monomer der Gruppe (b) eingesetzt, beispielsweise zwei oder mehr der oben genannten Ester in beliebigen Mischungen miteinander. Bevorzugt wird als Monomer der Gruppe nur ein Monomer aus der Gruppe (b) eingesetzt und besonders bevorzugt ein Monomer aus der Gruppe der Ester der Acrylsäure von C₁-C₄-Alkoholen.

Die Monomere der Gruppe (b) sind zu 1 bis 60 Gew.-% in der Reaktionsmischung aus (a), (b), (c) und (d) vorhanden, vorzugsweise in Mengen von 1 bis 29 Gew.-% und besonders bevorzugt in Mengen von 5 bis 25 Gew.-%.

Um die Polymeren zu modifizieren, kann man die Polymerisation gegebenenfalls in Gegenwart mindestens eines weiteren Monomeren (c) durchführen. Als Monomere (c) eignen sich prinzipiell sämtliche Monomere, die von den Monomeren (a) und (b) verschieden sind. Beispiele für solche Monomere sind Vinylacetat, Vinylpropionat, Hydroxyethylacrylat, Hydroxyethylmethacrylat, N-Vinylformamid, Acrylamid, Methacrylamid, N-Vinylpyrrolidon, N-Vinylimidazol, N-Vinylcaprolactam, Acrylsäure, Methacrylsäure, Acrylamidomethylpropansulfonsäure, Styrolsulfonsäure, Vinylsulfonsäure und Salze der Säuregruppen enthaltenden Monomeren. Die sauren Monomeren können in partiell oder in vollständig neutralisierter Form eingesetzt werden. Als Neutralisierungsmittel werden beispielsweise Natronlauge, Kalilauge, Natriumcarbonat, Natriumhydrogencarbonat, Calciumhydroxid und Ammoniak verwendet.

Weitere Beispiele für Monomere (c) sind Dialkylaminoalkyl(meth)acrylate und Dialkylaminoalkyl(meth)acrylamide wie Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Dimethylaminoethylacrylamid, Dimethylaminoethylmethacrylamid, Dimethylaminopropylacrylamid und Dimethylaminopropylmethacrylamid. Die basischen Monomeren können in Form der freien Basen, als Salze mit organischen Säuren oder Mineralsäuren oder in quaternierter Form bei der Polymerisation eingesetzt werden.

Darüber hinaus eignen sich als Monomere der Gruppe (c) Vinylester linearer oder verzweigter C₁-C₃₀-Carbonsäuren. Derartige Carbonsäuren sind gesättigt und unverzweigt, wie Ameisensäure, Essigsäure, Propionsäure, Buttersäure, Valeriansäure, Capronsäure (Hexansäure), Heptansäure, Caprylsäure (Octansäure), Pelargonsäure, Caprinsäure (Decansäure), Undecansäure, Laurylsäure (Dodecansäure), Tridecansäure, Myristinsäure (Tetradecansäure), Pentadecansäure, Palmitinsäure, Margarinsäure, Stearinsäure, Nonadecansäure, Arachinsäure, Behensäure, Lignocerinsäure (Tetracosansäure), Cerotinsäure, Melissinsäure (Triacontansäure). Erfindungsgemäß eignen sich auch gesättigte, verzweigte Carbonsäuren wie beispielsweise Isobuttersäure, Isovaleriansäure (3-Methylbuttersäure) und Tubercolostearinsäure sowie stark verzweigte gesättigte Carbonsäuren. Letztere sind unter dem Begriff Versatic-Säuren bekannt, wie beispielsweise Pivalinsäure, Neohexansäure, Neoheptansäure, Neooctansäure, Neononansäure und Neodecansäure. Geeignete Vinylester von linearen oder verzweigten C₁-C₃₀-Carbonsäuren sind beispielsweise Vinyllaurat, -stearat, Vinylpropionat, Versaticsäurevinylester, Vinylacetat, Propylheptansäurevinylester, Neodecansäurevinylester (VeoVA^{®} 10 der Firma Hexion Specialty Chemicals), Neononansäurevinylester (Veo-Va^{®} 9 der Firma Hexion Specialty Chemicals) sowie Vinylpelargonat.

Selbstverständlich können beliebige Mischungen der genannten Monomere (c) eingesetzt werden.

Die Monomeren der Gruppe (c) sind zu 0 bis 10 Gew.-% in der Reaktionsmischung aus den Komponenten (a), (b), (c) und (d) enthalten. Falls man sie zur Modifikation der Polymeren einsetzt, betragen die bevorzugt verwendeten Mengen 0,1 bis 5 Gew.-%, bezogen auf die Reaktionsmischung aus den Komponenten (a), (b), (c) und (d).

Die Polymerisation der Monomeren erfolgt in Gegenwart einer abgebauten Stärke als Komponente (d), die eine Molmasse M_{w} von 1 000 bis 65 000 g/mol hat. Die mittleren Molekulargewichte M_{w} der abgebauten Stärken können leicht durch dem Fachmann bekannte Methoden ermittelt werden, z. B. mittels Gelpermeationschromatographie unter Verwendung eines Vielwinkellichtstreudetektors.

Um eine solche Stärke zu erhalten, kann man von sämtlichen Stärkesorten ausgehen, z. B. von Stärke aus Kartoffeln, Mais, Weizen, Reis, Tapioka, Erbsen, Sorghum oder Wachsstärken, die einen Gehalt an Amylopektin von > 80, vorzugsweise > 95 Gew.-% haben wie Wachsmaisstärke und Wachskartoffelstärke. Die Stärken können anionisch und/oder kationisch modifiziert, verestert, verethert und/oder vernetzt sein. Bevorzugt werden anionische Stärken.

Sofern das Molekulargewicht M_{w} der Stärken nicht bereits in dem Bereich von 1 000 bis 65 000 g/mol liegt, werden sie vor dem Beginn der Polymerisation bzw. in einem separaten Schritt einem Molekulargewichtsabbau unterworfen. Bevorzugt ist eine Vorgehensweise, bei der man eine Stärke vor Beginn der Polymerisation enzymatisch und/oder oxidativ abbaut. Die Molmasse M_{w} der abgebauten Stärke liegt vorzugsweise in dem Bereich von 2 500 bis 35 000 g/mol.

Im Falle von kationisierten Stärken, werden diese beispielsweise durch Umsetzung von nativer Stärke mit mindestens einem Quaternierungsmittel wie 2,3-Epoxipropyltrimethylammoniumchlorid hergestellt. Die kationisierten Stärken enthalten quaternäre Ammoniumgruppen.

Im Falle von anionischen Stärken, werden diese beispielsweise durch oxidative Umsetzung der nativen Stärke mit einem geeigneten Oxidationsmittel wie Natriumhypochlorit oder Periodat erhalten.

Der Anteil kationischen oder anionischer Gruppen in der substituierten Stärke wird mit Hilfe des Substitutionsgrades (DS) angegeben. Er beträgt beispielweise 0,005 bis 1,0 vorzugsweise 0,01 bis 0,4.

Man kann sämtliche Stärken verwenden. Der Abbau der Stärken erfolgt vorzugsweise vor der Polymerisation der Monomeren, kann jedoch auch während der Polymerisation der Monomeren vorgenommen werden. Er kann oxidativ, thermisch, acidolytisch oder enzymatisch vorgenommen werden. Vorzugsweise erfolgt der Stärkeabbau enzymatisch und/oder oxidativ direkt vor Beginn der Emulsionspolymerisation in der Vorrichtung, in der die Polymerisation durchgeführt werden soll oder in einem separaten Schritt. Man kann eine einzige abgebaute Stärke oder auch Mischungen aus zwei oder mehreren abgebauten Stärken bei der Polymerisation einsetzen.

Die Stärke ist erfindungsgemäß zu 15 bis 40 Gew.-%, vorzugsweise 25 bis 35 Gew.-% in der Reaktionsmischung aus den Komponenten (a), (b), (c) und (d) enthalten.

Die erfindungsgemäßen feinteiligen, stärkehaltigen Polymerdispersionen sind dadurch erhältlich, dass man die Polymerisation in Gegenwart von mindestens 0,01 Gew.-%, bezogen auf die eingesetzten Monomeren, mindestens eines Terpen-haltigen Polymerisationsreglers durchführt.

Unter Terpen-haltigen Polymerisationsreglern im Sinne der vorliegenden Erfindung werden solche Kohlenwasserstoffe verstanden, die sich aus Isopren-Einheiten [H₂C=C(CH₃)-CH=CH₂] zusammensetzen und sich folglich aus der Isopren-Regel ableiten lassen. Terpene unterteilen sich in Monoterpene (C₁₀), Sesquiterpene (C₁₅), Diterpene (C₂₀), Sesterterpene (C₂₅), Triterpene (C₃₀) und Tetraterpene (C₄₀) sowie Polyterpene (> C₄₀). im Wesentlichen in acyclische, monocyclische, biscyclische und tricyclische Terpene. Dem Fachmann sind Terpene bekannt, beispielsweise aus Römpp Chemie Lexikon, 9. erweiterte und neu-bearbeitete Auflage, 1989-1992, Georg Thieme Verlag Stuttgart.

Im engeren Sinne werden unter Terpenen Kohlenwasserstoffe mit einem C₁₀H₁₆-Grundgerüst verstanden, sowie deren Hydrierungs- und Dehydrierungsderivate, sowie die davon abgeleiteten Alkohole, Ketone, Aldehyde und Ester.

Bevorzugt werden erfindungsgemäß monocyclische Monoterpene eingesetzt, besonders bevorzugt zweifach ungesättigte monocycliche Monoterpene (sog. p-Menthadiene). Beispiele für zweifach ungesättigte monocyclische Monoterpene sind α-, β- und γ- Terpinen, Terpinolen, (+)-(S)-α-Phellandren, (-)-(S)-α-Phellandren und Limonen. Bevorzugt sind α-Terpinen und Terpinolen, besonders bevorzugt ist Terpinolen.

Selbstverständlich können auch Mischungen der genannten Terpen-haltigen Polymerisationsregler eingesetzt werden, bevorzugt wird jedoch nur ein Terpen-haltiger Polymerisationsregler eingesetzt, besonders bevorzugt wird nur Terpinolen eingesetzt.

Die Terpen-haltigen Regler werden bei der Polymerisation in einer Menge von mindestens 0,01 Gew.-%, bezogen auf die Monomeren, eingesetzt. Die Mengen richten sich im Wesentlichen nach der Wirksamkeit des bzw. der jeweils eingesetzten Regler. Sie liegen üblicherweise in dem Bereich von 0,01 bis 10 Gew.-%, vorzugsweise 0,05 bis 5,0 Gew.-%, bezogen auf die Monomeren (a), (b) und (c).

Um die Polymerisation zu initiieren, setzt man erfindungsgemäß einen Redoxinitiator ein. Es handelt sich dabei vorzugsweise um pfropfaktive, wasserlösliche Redoxsysteme, beispielsweise aus Wasserstoffperoxid und einem Schwermetallsalz oder aus Wasserstoffperoxid und Schwefeldioxid oder aus Wasserstoffperoxid und Natriummetabisulfit. Weitere geeignete Redoxsysteme sind Kombinationen aus tert.-Butylhydroperoxid/Schwefeldioxid, Natrium- oder Kaliumpersulfat/Natriumbisulfit, Ammoniumpersulfat/Natriumbisulfit oder Ammoniumpersulfat/Eisen(II)sulfat. Vorzugsweise wird Wasserstoffperoxid in Kombination mit einem Schwermetallsalz wie Eisen(II)sulfat, eingesetzt. Häufig enthält das Redoxsytem zusätzlich ein weiteres Reduktionsmittel wie Ascorbinsäure, Natriumformaldehydsulfoxylat, Natriumdisulfit oder Natriumdithionit. Da die Polymerisation der Monomeren in Gegenwart von Stärke erfolgt und da Stärke ebenfalls als Reduktionsmittel wirkt, wird meistens auf die Mitverwendung weiterer Reduktionsmittel verzichtet. Die Redoxinitiatoren werden beispielsweise in einer Menge von 0,05 bis 10 Gew.-%, vorzugsweise 0,1 bis 5 Gew.-%, bezogen auf die Monomeren, eingesetzt.

Bevorzugt sind demnach Polymerdispiersionen, die erhältlich sind durch radikalisch initiierte Emulsionspolymerisation von ethylenisch ungesättigten Monomeren in Gegenwart mindestens eines Redoxinitiators und Stärke, wobei man als ethylenisch ungesättigte Monomere
(a) 30 bis 60 Gew.-% mindestens eines gegebenenfalls substituierten Styrols,
(b) 1 bis 29 Gew.-% mindestens eines Acrylsäure-C₁-C₁₂-alkylesters und/oder Methacrylsäure-C₁-C₁₂-alkylesters,
(c) 0,1 bis 5 Gew.-% mindestens eines anderen ethylenisch ungesättigten copolymerisierbaren Monomers,
   und als Stärke
(d) 25 bis 35 Gew.-% mindestens einer abgebauten Stärke einsetzt, die eine Molmasse M_{w} von 1 000 bis 65 000 g/mol hat,
wobei die Summe (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, mindestens eines Terpen-haltigen Polymerisationsreglers durchgeführt wird.

Besonders bevorzugt sind solche Polymerdispersionen, bei denen man als ethylenisch ungesättigte Monomere
(a) 40 bis 50 Gew.-% mindestens eines gegebenenfalls substituierten Styrols,
(b) 5 bis 25 Gew.-% eines Acrylsäure-C₁-C₁₂-alkylesters oder Methacrylsäure-C₁-C₁₂-alkylesters,
(c) 0,1 bis 5 Gew.-% mindestens eines anderen ethylenisch ungesättigten copolymerisierbaren Monomers,
   und als Stärke
(d) 25 bis 35 Gew.-% mindestens einer abgebauten Stärke einsetzt, die eine Molmasse M_{w} von 2 500 bis 35 000 g/mol hat,
wobei die Summe (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, mindestens eines Terpen-haltigen Polymerisationsreglers durchgeführt wird.

Ganz besonders bevorzugt sind feinteilige, stärkehaltige Polymerdispersionen, bei denen man als ethylenisch ungesättigte Monomere
(a) 40 bis 50 Gew.-% mindestens eines gegebenenfalls substituierten Styrols,
(b) 5 bis 25 Gew.-% eines Acrylsäure-C₁-C₁₂-alkylesters,
(c) 0,1 bis 5 Gew.-% mindestens eines anderen ethylenisch ungesättigten copolymerisierbaren Monomers,
   und als Stärke
(d) 25 bis 35 Gew.-% einer abgebauten anionischen Stärke einsetzt, die eine Molmasse M_{w} von 2 500 bis 35 000 g/mol hat,
wobei die Summe (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, mindestens eines monocyclischen Monoterpens als Polymerisationsreglers durchgeführt wird.

Insbesondere sind solche feinteilige, stärkehaltigen Polymerdispersionen bevorzugt, bei denen man als ethylenisch ungesättigte Monomere
(a) 40 bis 50 Gew.-% mindestens eines gegebenenfalls substituierten Styrols,
(b) 5 bis 25 Gew.-% eines Acrylsäure-C₁-C₄-alkylesters,
(c) 0,1 bis 5 Gew.-% mindestens eines anderen ethylenisch ungesättigten copolymerisierbaren Monomers,
   und als Stärke
(d) 25 bis 35 Gew.-% einer abgebauten anionischen Stärke einsetzt, die eine Molmasse M_{w} von 2 500 bis 35 000 g/mol hat,
wobei die Summe (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, Terpinolen als Polymerisationsreglers durchgeführt wird.

Gegenstand der Erfindung ist ebenfalls ein Verfahren zur Herstellung der erfindungsgemäßen feinteiligen, stärkehaltigen Polymerdispersionen, die durch Emulsionspolymerisation erhältlich sind.

Ein solches Verfahren zeichnet sich dadurch aus, dass man
(a) 30 bis 60 Gew.-% mindestens eines gegebenenfalls substituierten Styrols,
(b) 1 bis 60 Gew.-% mindestens eines Acrylsäure-C₁-C₁₂-alkylesters und/oder Methacrylsäure-C₁-C₁₂-alkylesters,
(c) 0 bis 10 Gew.-% mindestens eines anderen ethylenisch ungesättigten copolymerisierbaren Monomers, und
(d) 15 bis 40 Gew.-% mindestens einer abgebauten Stärke, die eine Molmasse M_{w} von 1 000 bis 65 000 g/mol hat,
wobei die Summe (a) + (b) + (c) + (d) = 100 % beträgt und sich auf den Gesamtfeststoffgehalt bezieht, in Gegenwart eines Redoxinitiators in einem wässrigen Medium polymerisiert und die Polymerisation in Gegenwart von mindestens 0,01 Gew.-%, bezogen auf die eingesetzten Monomeren, mindestens eines Terpen-haltigen Polymerisationsreglers durchgeführt wird.

Die Emulsionspolymerisation der Monomeren (a) bis (c) erfolgt in wässrigem Medium in Gegenwart einer Stärke (d) mit einer Molmasse M_{w} von 1 000 bis 65 000 g/mol. Die Monomere können nach Art der Emulsionspolymerisation sowohl in Zulauffahrweise als auch in Batchfahrweise polymerisiert werden. Vorzugsweise legt man eine wässrige Lösung einer abgebauten Stärke und eines Schwermetallsalzes vor und gibt die Monomeren entweder getrennt oder als Mischung und separat davon den oxidierend wirkenden Teil des Redox-Initiators, vorzugsweise Wasserstoffperoxid, kontinuierlich oder absatzweise zu. Auch eine Gradientenfahrweise, die aus der WO 2002/14393 A1 bekannt ist, kann zur Herstellung der stärkehaltigen Polymerdispersionen angewendet werden.

Dabei kann die Zugabe über den Dosierzeitraum gleichmäßig oder ungleichmäßig, d. h. mit wechselnder Dosiergeschwindigkeit erfolgen.

Die Polymerisation wird üblicherweise unter Ausschluss von Sauerstoff durchgeführt, bevorzugt in einer Inertgasatmosphäre, z. B. unter Stickstoff. Während der Polymerisation ist für eine gute Durchmischung der Komponenten zu sorgen. So wird das Reaktionsgemisch vorzugsweise während der gesamten Dauer der Polymerisation und einer sich gegebenenfalls daran anschließenden Nachpolymerisation gerührt.

Die Polymerisation wird üblicherweise bei Temperaturen zwischen 30 und 110 °C, vorzugsweise bei 50 bis 100 °C durchgeführt. Möglich ist auch eine Verwendung eines Druckreaktors oder Durchführung einer kontinuierlichen Polymerisation in einer Rührkessel-kaskade oder einem Strömungsrohr.

Zur Erhöhung Dispergierwirkung können dem Polymerisationsansatz übliche ionische, nichtionische oder amphotere Emulgatoren zugesetzt werden. Übliche Emulgatoren werden nur gegebenenfalls eingesetzt. Die angewendeten Mengen betragen 0 bis 3 Gew.-% und liegen vorzugsweise in dem Bereich von 0,02 bis 2 Gew.-% bezogen auf die Summe der eingesetzten Monomere (a), (b) und (c). Übliche Emulgatoren sind in der Literatur eingehend beschriebe, siehe beispielsweise M. Ash, I. Ash, Handbook of Industrial Surfactants, Third Edition, Synapse Information Resources Inc. Beispiele für übliche Emulgatoren sind die Umsetzungsprodukte von langkettigen einwertigen Alkoholen (C₁₀- bis C₂₂-Alkanole) mit 4 bis 50 Mol Ethylenoxid und/oder Propylenoxid pro Mol Alkohol oder ethoxylierte Phenole oder mit Schwefelsäure veresterte alkoxylierte Alkohole, die meistens in mit Alkalilauge neutralisierter Form verwendet werden. Weitere übliche Emulgatoren sind beispielsweise Natriumalkylsulfonate, Natriumalkylsulfate, Natriumdodecylbenzolsulfonat, Sulfobernsteinsäureester, quartäre Alkylammoniumsalze, Alkylbenzylammoniumsalze, wie Dimethyl-C₁₂- bis C₁₈- alkylbenzylammonium-chloride, primäre, sekundäre und tertiäre Fett-aminsalze, quartäre Amidoaminverbindungen, Alkylpyridiniumsalze, Alkylimidazoliniumsalze und Alkyloxazoliniumsalze.

Während der Emulsionspolymerisation kann man die Monomere entweder direkt in die Vorlage dosieren oder man kann sie in Form einer wässrigen Emulsion oder Miniemulsion dem Polymerisationsansatz zuführen. Dazu werden die Monomere unter Verwendung der bereits genannten üblichen Emulgatoren in Wasser emulgiert.

Die Polymerisation wird bei pH-Werten von 2 bis 9, vorzugsweise im schwach sauren Bereich bei pH-Werten von 3 bis 5,5 durchgeführt. Der pH-Wert kann vor oder während der Polymerisation mit üblichen Säuren wie Salzsäure, Schwefelsäure oder Essigsäure oder auch mit Basen wie Natronlauge, Kalilauge, Ammoniak, Ammoniumcarbonat, usw. auf den gewünschten Wert eingestellt werden. Bevorzugt wird die Dispersion nach Beendigung der Polymerisation auf einen pH-Wert zwischen 3 und 5,5 eingestellt.

Um die restlichen Monomeren möglichst weitgehend aus der stärkehaltigen Polymerdispersion zu entfernen, führt man zweckmäßigerweise eine Nachpolymerisation durch. Hierfür setzt man der Polymerdispersion nach Beendigung der Hauptpolymerisation einen Initiator aus der Gruppe Wasserstoffperoxid, Peroxide, Hydroperoxide und/oder Azostarter zu. Die Kombination der Initiatoren mit geeigneten Reduktionsmitteln, wie beispielsweise Ascorbinsäure oder Natriumbisulfit, ist ebenfalls möglich. Bevorzugt werden öllösliche, in Wasser schwerlösliche Initiatoren verwendet, z. B. übliche organische Peroxide wie Dibenzoylperoxid, Di-tert.-Butylperoxid, tert.-Butylhydroperoxid, Cumylhydroperoxid oder Bis-cyclohexylperoxidicarbonat eingesetzt.

Zur Nachpolymerisation wird das Reaktionsgemisch beispielsweise auf eine Temperatur erhitzt, die der Temperatur entspricht, bei der die Hauptpolymerisation durchgeführt wurde oder die um bis zu 20 °C, vorzugsweise bis zu 10 °C höher liegt. Die Hauptpolymerisation ist beendet, wenn der Polymerisationsinitiator verbraucht ist bzw. der Monomerumsatz beispielsweise mindestens 98 %, vorzugsweise mindestens 99,5 % beträgt. Zur Nachpolymerisation wird vorzugsweise tert.-Butylhydroperoxid eingesetzt. Die Nachpolymerisation wird beispielsweise in einem Temperaturbereich von 35 bis 100 °C, meistens 45 bis 95 °C durchgeführt.

Nach Beendigung der Polymerisation kann man einen Komplexbildner für Schwermetallionen in einer solchen Menge zur Polymerdispersion zusetzen, dass sämtliche Schwermetallionen komplex gebunden sind.

Die stärkehaltigen Polymerdispersionen enthalten dispergierte Teilchen mit einer mittleren Teilchengröße von 20 bis 500 nm, vorzugsweise 50 bis 250 nm. Die mittlere Teilchengröße kann mittels dem Fachmann bekannten Methoden wie beispielsweise Laserkorrelationsspektroskopie, Ultrazentrifugation oder HDF (Hydrodynamische Fraktionierung) bestimmt werden. Ein weiteres Maß für die Teilchengröße der dispergierten Polymerteilchen ist der LD-Wert. Zur Bestimmung des LD-Wertes (Lichtdurchlässigkeit) wird die jeweils zu untersuchende Polymerdispersion in 0,1 gew.-%iger wässriger Verdünnung in einer Küvette mit einer Kantenlänge von 2,5 cm mit Licht der Wellenlänge 600 nm vermessen und mit der entsprechenden Durchlässigkeit von Wasser unter den gleichen Messbedingungen vergleichen. Die Durchlässigkeit von Wasser wird dabei mit 100 % angegeben. Je feinteiliger die Dispersion ist, desto höher ist der LD-Wert, der nach der zuvor beschriebenen Methode gemessen wird. Aus den Messwerten kann die mittlere Teilchengröße errechnet werden, vgl. B. Verner, M. Bärta, B. Sedläcek, Tables of Scattering Functions for Spherical Particles, Prag, 1976, Edice Marco, Rada D-DATA, SVAZEK D-1.

Der Feststoffgehalt der stärkehaltigen Polymerdispersion beträgt beispielsweise 5 bis 50 Gew.-%, und liegt vorzugsweise in dem Bereich von 15 bis 40 Gew.-%.

Die oben beschriebenen feinteiligen, stärkehaltigen Polymerdispersionen werden als Leimungsmittel für Papier, Pappe und Karton verwendet. Sie können sowohl als Oberflächenleimungsmittel als auch als Masseleimungsmittel in den jeweils üblichen Mengen eingesetzt werden. Bevorzugt ist die Anwendung als Oberflächenleimungsmittel. Dabei können die erfindungsgemäßen Dispersionen mit allen bei der Oberflächenleimung geeigneten Verfahrensmethoden verarbeitet. Die Polymerdispersionen können beispielsweise mit einer Leimpresse, einer Filmpresse oder einem Gate-Roll Applicator auf die Oberfläche des zu leimenden Papiers aufgetragen werden. Für die Anwendung wird die Dispersion üblicherweise der Leimpressenflotte in einer Menge von 0,05 bis 3 Gew.-% bezogen auf Festsubstanz zugesetzt und richtet sich nach dem gewünschten Leimungsgrad der auszurüstenden Papiere. Des Weiteren kann die Leimpressenflotte weitere Stoffe enthalten, wie z. B. Stärke, Pigmente, Farbstoffe, optische Aufheller, Biozide, Verfestiger für Papier, Fixiermittel, Entschäumer, Retentionsmittel, und/oder Entwässerungsmittel. Die Mengen an Polymer, die auf die Oberfläche von Papierprodukten aufgetragen werden, betragen beispielsweise 0,005 bis 1,0 g/m², vorzugsweise 0,01 bis 0,5 g/m². Die erfindungsgemäßen Leimungsmittel haben gegenüber den bekannten Leimungsmitteln den Vorteil, dass sie schon bei geringen Auftragmengen, vor allem auf ungestrichenen holzfreien Papieren eine bessere Leimungswirkung ergeben.

Die Erfindung wird anhand der folgenden, nicht einschränkenden Beispiele näher erläutert.

### Beispiele

Die Prozentangaben in den Beispielen bedeuten Gewichtsprozent, sofern aus dem Zusammenhang nichts anderes hervorgeht.

Die LD-Werte wurden in 0,1 %-iger wässriger Lösung der zu bestimmenden Dispersion mit einem Gerät der Firma Hach DR/2010 bei einer Wellenlänge von 600 nm bestimmt. Die Teilchengrößen wurden mittels eines High Performance Particle Sizer (HPPS) der Firma Malvern unter Verwendung eines He-Ne-Lasers (633 nm) bei einem Streuwinkel von 173 ° bestimmt.

### Beispiel 1

In einem Polymerisationsgefäß, das mit Rührer, Rückflusskühler, Dosiervorrichtungen und Einrichtung zum Arbeiten unter Stickstoffatmosphäre ausgestattet war, wurden 65,0 g einer oxidativ abgebauten Stärke mit einem COO⁻-Substitutionsgrad von 0,03-0,04 und einem K-Wert von 34 (bestimmt nach DIN 53726) (Amylex^{®} 15 der Firma Südstärke), 0,80 g Calciumacetat-Hydrat und 380 g Wasser vorgelegt und unter Rühren auf 85 °C erwärmt. Dann gab man 1,60 g einer 1,0 gew.-%igen Enzymlösung (α-Amylase, Termamyl^{®} 120 L der Firma Novo Nordisk) zu und rührte den Ansatz anschließend für 20 min. Der enzymatische Stärkeabbau wurde durch die Zugabe von 4,0 g Eisessig abgestoppt.

Danach erfolgte die Zugabe von 2,0 g einer 10,0 gew.-%igen Eisen(II)sulfatlösung und darauf folgend für 10 min der Zulauf von 4,0 g einer 2,5 gew.-%igen Wasserstoffperoxidlösung. Anschließend erfolgte der Zulauf von weiteren 40,0 g einer 2,5 gew.-%igen Wasserstoffperoxidlösung innerhalb von 120 min. Zeitgleich wurden bei 85 °C innerhalb von 90 min 118,0 g Styrol, 30,0 g t-Butylacrylat und 1,1 g Terpinolen sowie parallel dazu 110.0 g Wasser zugegeben. Danach wurden 40,0 g vollentionisiertes Wasser zugesetzt. Nachdem der Monomerzulauf beendet war, wurde noch 30 min bei 85 °C nachpolymerisiert, bevor der Ansatz auf 65 °C abgekühlt wurde. Bei dieser Temperatur wurden 4,0 g tert.-Butylhydroperoxid zugesetzt und für 40 min nachgerührt. Anschlieβend wurde auf Raumtemperatur abgekühlt.

Man erhielt eine Dispersion mit einem Feststoffgehalt von 25,4 Gew.-%, einem LD-Wert von 57 % und einem Teilchendurchmesser von 94 nm

### Vergleichsbeispiel 1

In einem Polymerisationsgefäß, das mit Rührer, Rückflusskühler, Dosiervorrichtungen und Einrichtung zum Arbeiten unter Stickstoffatmosphäre ausgestattet war, wurden 65,0 g einer oxidativ abgebauten Stärke mit einem COO-Substitutionsgrad von 0,03-0,04 und einem K-Wert von 34 (bestimmt nach DIN 53726) (Amylex^{®} 15 der Firma Südstärke), 0,80 g Calciumacetat-Hydrat und 380 g Wasser vorgelegt und unter Rühren auf 85 °C erwärmt. Dann gab man 1,60 g einer 1,0 gew.-%igen Enzymlösung (α-Amylase, Termamyl^{®} 120 L der Firma Novo Nordisk) zu und rührte den Ansatz anschließend für 20 min. Der enzymatische Stärkeabbau wurde durch die Zugabe von 4,0 g Eisessig abgestoppt.

Danach erfolgte die Zugabe von 2,0 g einer 10,0 gew.-%igen Eisen(II)sulfatlösung und darauf folgend für 10 min der Zulauf von 4,0 g einer 2,5 gew.-%igen Wasserstoffperoxidlösung. Anschließend erfolgte der Zulauf von weiteren 40,0 g einer 2,5 gew.-%igen Wasserstoffperoxidlösung innerhalb von 120 min. Zeitgleich wurden bei 85 °C innerhalb von 90 min 118,4 g Styrol und 29,6 g t-Butylacrylat sowie parallel dazu 110.0 g Wasser zugegeben. Danach wurden 40,0 g vollentionisiertes Wasser zugesetzt. Nachdem der Monomerzulauf beendet war, wurde noch 30 min bei 85 °C nachpolymerisiert, bevor der Ansatz auf 65 °C abgekühlt wurde. Bei dieser Temperatur wurden 4,0 g tert.-Butylhydroperoxid zugesetzt und für 40 min nachgerührt. Anschließend wurde auf Raumtemperatur abgekühlt.

Man erhielt eine Dispersion mit einem Feststoffgehalt von 25,03 Gew.-%, einem LD-Wert von 43 % und einem Teilchendurchmesser von 99 nm

### Beispiel 2

In einem Polymerisationsgefäß, das mit Rührer, Rückflusskühler, Dosiervorrichtungen und Einrichtung zum Arbeiten unter Stickstoffatmosphäre ausgestattet war, wurden 75,0 g einer oxidativ abgebauten Stärke mit einem COO⁻-Substitutionsgrad von 0,03-0,04 und einem K-Wert von 34 (bestimmt nach DIN 53726) (Amylex^{®} 15 der Firma Südstärke) und 370 g Wasser vorgelegt und unter Rühren auf 80 °C erwärmt. Dann wurden 0,80 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 110,0 g Styrol, 29,0 g t-Butylacrylat, 1,5 g Acrylsäure und 0,9 g Terpinolen sowie 110,0 g vollentionisiertes Wasser und 0,5 g einer 40 gew.-%igen Emulgatorlösung (Na-C₁₄-C₁₅-alkylsulfonate, Emulgator^{®} K30 der Firma Bayer AG). Nachdem der Monomerzulauf beendet war, wurde noch 30 min bei 85 °C nachpolymerisiert. Danach erfolgte die Zugabe von 15,0 g vollentionisiertem Wasser sowie von 2,0 g tert.-Butylhydroperoxid. Der Ansatz wurde dann für 40 min nachgerührt. Anschließend wurde auf Raumtemperatur abgekühlt.

Man erhielt eine Dispersion mit einem Feststoffgehalt von 25,11 Gew.-%, einem LD-Wert von 70 % und einem Teilchendurchmesser von 77 nm

### Vergleichsbeispiel 2

In einem Polymerisationsgefäß, das mit Rührer, Rückflusskühler, Dosiervorrichtungen und Einrichtung zum Arbeiten unter Stickstoffatmosphäre ausgestattet war, wurden 75,0 g einer oxidativ abgebauten Stärke mit einem COO⁻-Substitutionsgrad von 0,03-0,04 und einem K-Wert von 34 (bestimmt nach DIN 53726) (Amylex^{®} 15 der Firma Südstärke) und 370 g Wasser vorgelegt und unter Rühren auf 80 °C erwärmt. Dann wurden 0,80 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 110,0 g Styrol, 28,5 g t-Butylacrylat und 1,5 g Acrylsäure sowie 110,0 g vollentionisiertes Wasser und 0,5 g einer 40 gew.-%igen Emulgatorlösung (Na-C₁₄-C₁₅-alkylsulfonate, Emulgator^{®} K30 der Firma Bayer AG) Nachdem der Monomerzulauf beendet war, wurde noch 30 min bei 85 °C nachpolymerisiert. Danach erfolgte die Zugabe von 15,0 g vollentionisiertem Wasser sowie von 2,0 g tert.-Butylhydroperoxid. Der Ansatz wurde dann für 40 min nachgerührt. Anschließend wurde auf Raumtemperatur abgekühlt.

Man erhielt eine Dispersion mit einem Feststoffgehalt von 24,99 Gew.-%, einem LD-Wert von 56 % und einem Teilchendurchmesser von 88 nm

### Beispiel 3

In einem Polymerisationsgefäß, das mit Rührer, Rückflusskühler, Dosiervorrichtungen und Einrichtung zum Arbeiten unter Stickstoffatmosphäre ausgestattet war, wurden 75,0 g einer oxidativ abgebauten Stärke mit einem COO⁻-Substitutionsgrad von 0,03-0,04 und einem K-Wert von 34 (bestimmt nach DIN 53726) (Amylex^{®} 15 der Firma Südstärke) und 370 g Wasser vorgelegt und unter Rühren auf 80 °C erwärmt. Dann wurden 0,80 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 96,0 g Styrol, 43,0 g t-Butylacrylat, 1,5 g Acrylsäure und 1,1 g Terpinolen sowie 110,0 g vollentionisiertes Wasser und 0,5 g einer 40 gew.-%igen Emulgatorlösung (Na-C₁₄-C₁₅-alkylsulfonate, Emulgator^{®} K30 der Firma Bayer AG). Nachdem der Monomerzulauf beendet war, wurde noch 30 min bei 85 °C nachpolymerisiert. Danach erfolgte die Zugabe von 15,0 g vollentionisiertem Wasser sowie von 2,0 g tert.-Butylhydroperoxid. Der Ansatz wurde für 40 min nachgerührt. Anschließend wurde auf Raumtemperatur abgekühlt.

Man erhielt eine Dispersion mit einem Feststoffgehalt von 25.11 Gew.-%, einem LD-Wert von 75 % und einem Teilchendurchmesser von 73 nm.

### Vergleichsbeispiel 3

In einem Polymerisationsgefäß, das mit Rührer, Rückflusskühler, Dosiervorrichtungen und Einrichtung zum Arbeiten unter Stickstoffatmosphäre ausgestattet war, wurden 75,0 g einer oxidativ abgebauten Stärke mit einem COO⁻-Substitutionsgrad von 0,03-0,04 und einem K-Wert von 34 (bestimmt nach DIN 53726) (Amylex^{®} 15 der Firma Südstärke) und 370 g Wasser vorgelegt und unter Rühren auf 80 °C erwärmt. Dann wurden 0,80 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 96,0 g Styrol, 42,5 g t-Butylacrylat und 1,5 g Acrylsäure sowie 110,0 g vollentionisiertes Wasser und 0,5 g einer 40 gew.-%igen Emulgatorlösung (Na-C₁₄-C₁₅-alkylsulfonate, Emulgator^{®} K30 der Firma Bayer AG). Nachdem der Monomerzulauf beendet war, wurde noch 30 min bei 85 °C nachpolymerisiert. Danach erfolgte die Zugabe von 15,0 g vollentionisiertem Wasser sowie von 2,0 g tert.-Butylhydroperoxid. Der Ansatz wurde für 40 min nachgerührt. Anschließend wurde auf Raumtemperatur abgekühlt.

Man erhielt eine Dispersion mit einem Feststoffgehalt von 24.51 Gew.-%, einem LD-Wert von 70 % und einem Teilchendurchmesser von 76 nm.

### Beispiel 4

In einem Polymerisationsgefäß, das mit Rührer, Rückflusskühler, Dosiervorrichtungen und Einrichtung zum Arbeiten unter Stickstoffatmosphäre ausgestattet war, wurden 75,0 g einer oxidativ abgebauten Stärke mit einem COO⁻-Substitutionsgrad von 0,03-0,04 und einem K-Wert von 34 (bestimmt nach DIN 53726) (Amylex^{®} 15 der Firma Südstärke) und 370 g Wasser vorgelegt und unter Rühren auf 80 °C erwärmt. Dann wurden 0,80 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 50,0 g einer 5,0 gew.-%igen Wasserstoffperoxidlösung innerhalb von 150 min. Ebenfalls zeitgleich erfolgte innerhalb von 120 min der Monomerzulauf bestehend aus 93,0 g Styrol, 46,0 g n-Butylacrylat, 1,5 g Acrylsäure und 1,0 g Terpinolen sowie 110,0 g vollentionisiertes Wasser und 0,5 g einer 40 gew.-%igen Emulgatorlösung (Na-C₁₄-C₁₅-alkylsulfonate, Emulgator^{®} K30 der Firma Bayer AG). Nachdem der Monomerzulauf beendet war, wurde noch 30 min bei 85 °C nachpolymerisiert. Danach erfolgte die Zugabe von 15,0 g vollentionisiertem Wasser sowie von 2,0 g tert.-Butylhydroperoxid. Der Ansatz wurde für 40 min nachgerührt. Anschlieβend wurde auf Raumtemperatur abgekühlt.

Man erhielt eine Dispersion mit einem Feststoffgehalt von 25,39 Gew.- %, einem LD-Wert von 74 % und einem Teilchendurchmesser von 82 nm.

### Vergleichsbeispiel 4

In einem Polymerisationsgefäß, das mit Rührer, Rückflusskühler, Dosiervorrichtungen und Einrichtung zum Arbeiten unter Stickstoffatmosphäre ausgestattet war, wurden 75,0 g einer oxidativ abgebauten Stärke mit einem COO⁻-Substitutionsgrad von 0,03-0,04 und einem K-Wert von 34 (bestimmt nach DIN 53726) (Amylex^{®} 15 der Firma Südstärke) und 370 g Wasser vorgelegt und unter Rühren auf 80 °C erwärmt. Dann wurden 0,80 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 50,0 g einer 5,0 gew.-%igen Wasserstoffperoxidlösung innerhalb von 150 min. Ebenfalls zeitgleich erfolgte innerhalb von 120 min der Monomerzulauf bestehend aus 92,5 g Styrol, 46,0 g n-Butylacrylat und 1,5 g Acrylsäure sowie 110,0 g vollentionisiertes Wasser und 0,5 g einer 40 gew.-%igen Emulgatorlösung (Na-C₁₄-C₁₅-alkylsulfonate, Emulgator^{®} K30 der Firma Bayer AG). Nachdem der Monomerzulauf beendet war, wurde noch 30 min bei 85 °C nachpolymerisiert. Danach erfolgte die Zugabe von 15,0 g vollentionisiertem Wasser sowie von 2,0 g tert.-Butylhydroperoxid. Der Ansatz wurde für 40 min nachgerührt. Anschließend wurde auf Raumtemperatur abgekühlt.

Man erhielt eine Dispersion mit einem Feststoffgehalt von 25.88 Gew.-%, einem LD-Wert von 75 % und einem Teilchendurchmesser von 91 nm.

### Beispiel 5

In einem Polymerisationsgefäß, das mit Rührer, Rückflusskühler, Dosiervorrichtungen und Einrichtung zum Arbeiten unter Stickstoffatmosphäre ausgestattet war, wurden 83,0 g einer Stärke (Kartoffelstärkehydroxyethylether, Solfarex^{®} A55 der Firma Avebe) und 480 g Wasser vorgelegt und unter Rühren auf 80 °C erwärmt. Dann wurden 1,9 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 86,0 g Styrol, 44,0 g n-Butylacrylat, 0,4 g Acrylsäure und 0,7 g Terpinolen. Nachdem der Monomerzulauf beendet war, wurde noch 60 min bei 80 °C nachpolymerisiert. Danach erfolgte die Zugabe von 15,0 g vollentionisiertem Wasser. Anschließend wurde auf Raumtemperatur abgekühlt.

Man erhielt eine Dispersion mit einem Feststoffgehalt von 25.9 Gew.-%, einem LD-Wert von 79 % und einem Teilchendurchmesser von 72 nm.

### Vergleichsbeispiel 5

In einem Polymerisationsgefäß, das mit Rührer, Rückflusskühler, Dosiervorrichtungen und Einrichtung zum Arbeiten unter Stickstoffatmosphäre ausgestattet war, wurden 83,0 g einer Stärke (Kartoffelstärkehydroxyethylether, Solfarex^{®} A55 der Firma Avebe) und 480 g Wasser vorgelegt und unter Rühren auf 80 °C erwärmt. Dann wurden 1,9 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 86,0 g Styrol, 44,0 g n-Butylacrylat und 0,4 g Acrylsäure. Nachdem der Monomerzulauf beendet war, wurde noch 60 min bei 80 °C nachpolymerisiert. Danach erfolgte die Zugabe von 15,0 g vollentionisiertem Wasser. Anschließend wurde auf Raumtemperatur abgekühlt.

Man erhielt eine Dispersion mit einem Feststoffgehalt von 25.39 Gew.-%, einem LD-Wert von 76 % und einem Teilchendurchmesser von 70 nm.

### Beispiel 6

In einem Polymerisationsgefäß, das mit Rührer, Rückflusskühler, Dosiervorrichtungen und Einrichtung zum Arbeiten unter Stickstoffatmosphäre ausgestattet war, wurden 68,0 g einer nativen Erbsenstärke und 480 g Wasser vorgelegt und unter Rühren auf 80 °C erwärmt. Dann wurden 6,0 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 93,0 g Styrol, 46,0 g n-Butylacrylat, 1,5 g Acrylsäure und 1,1 g Terpinolen. Nachdem der Monomerzulauf beendet war, wurde noch 60 min bei 80 °C nachpolymerisiert. Danach erfolgte die Zugabe von 15,0 g vollentionisiertem Wasser. Anschließend wurde auf Raumtemperatur abgekühlt.

Man erhielt eine Dispersion mit einem Feststoffgehalt von 25.79 Gew.-%, einem LD-Wert von 12 % und einem Teilchendurchmesser von 158 nm.

### Vergleichsbeispiel 6

In einem Polymerisationsgefäß, das mit Rührer, Rückflusskühler, Dosiervorrichtungen und Einrichtung zum Arbeiten unter Stickstoffatmosphäre ausgestattet war, wurden 68,0 g einer nativen Erbsenstärke und 480 g Wasser vorgelegt und unter Rühren auf 80 °C erwärmt. Dann wurden 6,0 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 93,0 g Styrol, 46,0 g n-Butylacrylat und 1,5 g Acrylsäure. Nachdem der Monomerzulauf beendet war, wurde noch 60 min bei 80 °C nachpolymerisiert. Danach erfolgte die Zugabe von 15,0 g vollentionisiertem Wasser. Anschließend wurde auf Raumtemperatur abgekühlt.

Man erhält eine Dispersion mit einem Feststoffgehalt von 25.59 Gew.-%, einem LD-Wert von 9 % und einem Teilchendurchmesser von 167 nm.

### Beispiel 7

In einem Polymerisationsgefäß, das mit Rührer, Rückflusskühler, Dosiervorrichtungen und Einrichtung zum Arbeiten unter Stickstoffatmosphäre ausgestattet war, wurden 91,0 g einer anionischenTapiokastärke (AF 382 S der Firma Eimhaeng Modified Starch) und 400 g Wasser vorgelegt und unter Rühren auf 80 °C erwärmt. Dann wurden 4,0 g einer 1,0 gew.-%igen Enzymlösung (α-Amylase, Termamyl^{®} 120 L der Firma Novo Nordisk) zugegeben und der Ansatz für 20 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 91,0 g einer 5,0 gew.-%igen Wasserstoffperoxidlösung innerhalb von 165 min. Nach 10 min erfolgte der Monomerzulauf bestehend aus 85,0 g Styrol, 33,0 g n-Butylacrylat, 1,5g Acrylsäure und 1,1 g Terpinolen sowie 0,5 g einer 40 gew.-%igen Emulgatorlösung (Na-C₁₄-C₁₅-alkylsulfonate, Emulgator^{®} K30 der Firma Bayer AG) und 80,0 g Wasser innerhalb von 120 min. Nachdem der Monomerzulauf beendet war, wurde noch 35 min bei 80 °C nachpolymerisiert. Danach erfolgte die Zugabe von 15,0 g vollentionisiertem Wasser sowie von 2,0 g tert.-Butylhydroperoxid. Der Ansatz wurde für 30 min nachgerührt. Anschließend wurde auf Raumtemperatur abgekühlt.

Man erhielt eine Dispersion mit einem Feststoffgehalt von 24,88 Gew.-%, einem LD-Wert von 56 % und einem Teilchendurchmesser von 115 nm.

### Vergleichsbeispiel 7

In einem Polymerisationsgefäß, das mit Rührer, Rückflusskühler, Dosiervorrichtungen und Einrichtung zum Arbeiten unter Stickstoffatmosphäre ausgestattet war, wurden 91,0 g einer anionischen Tapiokastärke (AF 382 S der Firma Eimhaeng Modified Starch) und 400 g Wasser vorgelegt und unter Rühren auf 80 °C erwärmt. Dann wurden 4,0 g einer 1,0 gew.-%igen Enzymlösung (α-Amylase, Termamyl^{®} 120 L der Firma Novo Nordisk) zugegeben und der Ansatz für 20 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 91,0 g einer 5,0 gew.-%igen Wasserstoffperoxidlösung innerhalb von 165 min. Nach 10 min erfolgte der Monomerzulauf bestehend aus 85,0 g Styrol, 33,0 g n-Butylacrylat und 1,5g Acrylsäure sowie 0,5 g einer 40 gew.-%igen Emulgatorlösung (Na-C₁₄-C₁₅-alkylsulfonate, Emulgator^{®} K30 der Firma Bayer AG) und 80,0 g Wasser innerhalb von 120 min. Nachdem der Monomerzulauf beendet war, wurde noch 35 min bei 80 °C nachpolymerisiert. Danach erfolgte die Zugabe von 15,0 g vollentionisiertem Wasser sowie von 2,0 g tert.-Butylhydroperoxid. Der Ansatz wurde für 30 min nachgerührt. Anschließend wurde auf Raumtemperatur abgekühlt.

Man erhielt eine Dispersion mit einem Feststoffgehalt von 25,21 Gew.-%, einem LD-Wert von 31 % und einem Teilchendurchmesser von 125 nm.

### Beispiel 8

In einem Polymerisationsgefäß, das mit Rührer, Rückflusskühler, Dosiervorrichtungen und Einrichtung zum Arbeiten unter Stickstoffatmosphäre ausgestattet war, wurden 83,0 g einer Stärke (Kartoffelstärkehydroxyethylether, Solfarex^{®} A55 der Firma Avebe) und 480 g Wasser vorgelegt und unter Rühren auf 80 °C erwärmt. Dann wurden 1,9 g einer 1,0 gew.-%-igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 82,0 g Styrol, 44,0 g n-Butylacrylat, 4,0g Acrylsäure und 0,7 g Terpinolen. Nachdem der Monomerzulauf beendet war, wurde noch 60 min bei 80 °C nachpolymerisiert. Danach erfolgte die Zugabe von 15,0 g vollentionisiertem Wasser. Anschließend wurde auf Raumtemperatur abgekühlt.

Man erhielt eine Dispersion mit einem Feststoffgehalt von 25,7 Gew.-%, einem LD-Wert von 74 % und einem Teilchendurchmesser von 81 nm.

### Vergleichsbeispiel 8

In einem Polymerisationsgefäß, das mit Rührer, Rückflusskühler, Dosiervorrichtungen und Einrichtung zum Arbeiten unter Stickstoffatmosphäre ausgestattet war, wurden 83,0 g einer Stärke (Kartoffelstärkehydroxyethylether, Solfarex^{®} A55 der Firma Avebe) und 480 g Wasser vorgelegt und unter Rühren auf 80 °C erwärmt. Dann wurden 1,9 g einer 1,0 gew.-%igen Enzymlösung (α-Amylase, Multifect^{®} AA1200L der Firma Genencor) zugegeben und der Ansatz für 30 min gerührt. Danach erfolgte die Zugabe von 4,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85 °C erhöht. Zeitgleich begann der Zulauf von 75,0 g einer 5,0 gew.-%igen Wasserstoffperoxidlösung innerhalb von 180 min. Ebenfalls zeitgleich erfolgte innerhalb von 120 min der Monomerzulauf bestehend aus 82,0 g Styrol, 44,0 g n-Butylacrylat und 4,0 g Acrylsäure. Nachdem der Monomerzulauf beendet war, wurde noch 60 min bei 80 °C nachpolymerisiert. Danach erfolgte die Zugabe von 15,0 g vollentionisiertem Wasser. Anschließend wurde auf Raumtemperatur abgekühlt.

Man erhielt eine Dispersion mit einem Feststoffgehalt von 25.9 %, einem LD-Wert von 77 % und einem Teilchendurchmesser von 76 nm.

### Beispiel 9

In einem Polymerisationsgefäß, das mit Rührer, Rückflusskühler, Dosiervorrichtungen und Einrichtung zum Arbeiten unter Stickstoffatmosphäre ausgestattet war, wurden 59,0 g einer oxidativ abgebauten Tapiokastärke (der Firma Siam Modified Starch Co., Ltd.) und 278 g Wasser vorgelegt und unter Rühren auf 80°C erwärmt. Dann wurden 1,90 g einer 1,0 gew.-%igen Enzymlösung (α-Amylase, Termamyl^{®} 120 L der Fa. Novo Nordisk) zugegeben und der Ansatz für 20 min gerührt. Danach erfolgte die Zugabe von 3,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85°C erhöht. Zeitgleich begann der Zulauf von 51,0 g einer 5,0 gew.-%igen Wasserstoffperoxidlösung innerhalb von 165 min. Nach 10 min erfolgte der Monomerzulauf bestehend aus 70,5 g Styrol, 15 g t-Butylacrylat, 15 g n-Butylacrylat, 0,8 g Terpinolen, 0,4 g einer 40 gew.-%igen Emulgatorlösung (Na-C₁₄-C₁₅-alkylsulfonate, Emulgator^{®} K30 der Firma Bayer AG) sowie 82,5 g Wasser innerhalb von 120 min. Danach wurden 11,3 g vollentionisiertes Wasser zugesetzt. Nachdem der Monomerzutauf beendet war, wurde noch 30 min bei 85 °C nachpolymerisiert. Es erfolgte anschließend die Zugabe von 1,5 g einer 10 gew.-%igen tert.-Butylhydroperoxid Lösung, und der Ansatz wurde für 30 min nachgerührt. Anschließend erfolgte die Abkühlung auf Raumtemperatur.

Man erhielt eine Dispersion mit einem Feststoffgehalt von 25,4 Gew.-%, einem LD-Wert von 51 % und einem Teilchendurchmesser von 120 nm

### Vergleichsbeispiel 9

In einem Polymerisationsgefäß, das mit Rührer, Rückflusskühler, Dosiervorrichtungen und Einrichtung zum Arbeiten unter Stickstoffatmosphäre ausgestattet war, wurden 59,0 g einer oxidativ abgebauten Tapiokastärke (der Firma Siam Modified Starch Co., Ltd.) und 278 g Wasser vorgelegt und unter Rühren auf 80°C erwärmt. Dann wurden 1,90 g einer 1,0 gew.-%igen Enzymlösung (α-Amylase, Termamyl^{®} 120 L der Firma Novo Nordisk) zugegeben und der Ansatz für 20 min gerührt. Danach erfolgte die Zugabe von 3,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85°C erhöht. Zeitgleich begann der Zulauf von 51,0 g einer 5,0 gew.-%igen Wasserstoffperoxidlösung innerhalb von 165 min. Nach 10 min erfolgte der Monomerzulauf bestehend aus 70,5 g Styrol, 15 g t-Butylacrylat, 15 g n-Butylacrylat sowie 0,4 g einer 40 gew.-%igen Emulgatorlösung (Na-C₁₄-C₁₅-alkylsulfonate, Emulgator^{®} K30 der Firma Bayer AG) und 82,5 g Wasser innerhalb von 120 min. Danach wurden 11,3 g vollentionisiertes Wasser zugesetzt. Nachdem der Monomerzulauf beendet war, wurde noch 30 min bei 85 °C nachpolymerisiert. Es erfolgte anschließend die Zugabe von 1,5 g einer 10 gew.-%igen tert.-Butylhydroperoxid Lösung, und der Ansatz wurde für 30 min nachgerührt. Anschließend erfolgte die Abkühlung auf Raumtemperatur.

Man erhielt eine Dispersion mit einem Feststoffgehalt von 26,4 Gew.-%, einem LD-Wert von 56 % und einem Teilchendurchmesser von 101 nm

### Beispiel 10

In einem Polymerisationsgefäß, das mit Rührer, Rückflusskühler, Dosiervorrichtungen und Einrichtung zum Arbeiten unter Stickstoffatmosphäre ausgestattet war, wurden 54,0 g einer oxidativ abgebauten Tapiokastärke (der Firma Siam Modified Starch Co., Ltd.) und 278 g Wasser vorgelegt und unter Rühren auf 80°C erwärmt. Dann wurden 2,4 g einer 1,0 gew.-%igen Enzymlösung (α-Amylase, Termamyl^{®} 120 L der Firma Novo Nordisk) zugegeben und der Ansatz für 20 min gerührt. Danach erfolgte die Zugabe von 3,0 g einer 10,0 gew.-%igen Eisen(II)sulfatlösung, wodurch der enzymatische Abbau gestoppt wurde.

Die Reaktionstemperatur wurde anschließend innerhalb von 5 min auf 85°C erhöht. Zeitgleich begann der Zulauf von 51,0 g einer 5,0 gew.-%igen Wasserstoffperoxidlösung innerhalb von 165 min sowie ebenfalls zeitgleich der Monomerzulauf bestehend aus 74,0 g Styrol, 7,5 g t-Butylacrylat, 22,5 g n-Butylacrylat, 1,1g Acrylsäure, 0,5 g Terpinolen, 0,4 g einer 40 gew.-%igen Emulgatorlösung (Na-C₁₄-C₁₅-alkylsulfonate, Emulgator^{®} K30 der Firma Bayer AG) sowie 82,5 g Wasser innerhalb von 120 min. Danach wurden 11,3 g vollentionisiertes Wasser zugesetzt. Nachdem der Monomerzulauf beendet war, wurde noch 30 min bei 85 °C nachpolymerisiert. Es erfolgte anschließend die Zugabe von 1,5 g einer 10 gew.-%igen tert.-Butylhydroperoxid Lösung, und der Ansatz wurde für 30 min nachgerührt. Anschließend erfolgte die Abkühlung auf Raumtemperatur.

Man erhielt eine Dispersion mit einem Feststoffgehalt von 25,5 Gew.-%, einem LD-Wert von 61 % und einem Teilchendurchmesser von 94 nm

### Vergleichsbeispiel 10

In einem Polymerisationsgefäß, das mit Rührer, Rückflusskühler, Dosiervorrichtungen und Einrichtung zum Arbeiten unter Stickstoffatmosphäre ausgestattet war, wurden 54,0 g einer oxidativ abgebauten Tapiokastärke (der Firma Siam Modified Starch Co., Ltd.) und 278 g Wasser vorgelegt und unter Rühren auf 80°C erwärmt. Dann wurden 2,4 g einer 1,0 gew.-%igen Enzymlösung (α-Amylase, Termamyl^{®} 120 L der Firma Novo Nordisk) zugegeben und der Ansatz für 20 min gerührt. Danach erfolgte die Zugabe von 3,0 g einer 10,0 gew.-%igen Eisen(II)sulfatlösung, wodurch den enzymatische Abbau gestoppt wurde.

Die Reaktionstemperatur wurde anschließend innerhalb von 5 min auf 85°C erhöht. Zeitgleich begann der Zulauf von 51,0 g einer 5,0 gew.-%igen Wasserstoffperoxidlösung innerhalb von 165 min sowie ebenfalls zeitgleich der Monomerzulauf von 74,0 g Styrol, 7,5 g t-Butylacrylat, 22,5 g n-Butylacrylat, 1,1 g Acrylsäure, 0,4 g einer 40 gew.-%igen Emulgatorlösung (Na-C₁₄-C₁₅-alkylsulfonate, Emulgator^{®} K30 der Firma Bayer AG) sowie 82,5 g Wasser innerhalb von 120 min. Danach wurden 11,3 g vollentionisiertes Wasser zugesetzt. Nachdem der Monomerzulauf beendet war, wurde noch 30 min bei 85 °C nachpolymerisiert. Es erfolgte anschließend die Zugabe von 1,5 g einer 10 gew.-%igen tert.-Butylhydroperoxid Lösung, und der Ansatz wurde für 30 min nachgerührt. Anschließend erfolgte die Abkühlung auf Raumtemperatur.

Man erhielt eine Dispersion mit einem Feststoffgehalt von 26,2 Gew.-%, einem LD-Wert von 58 % und einem Teilchendurchmesser von 90 nm

### Vergleichsbeispiel A, entsprechend Beispiel 5 aus WO 07/000420 A1

In einem 21-Planschilffkolben mit Rührer und Innentemperaturmessung wurden 79,55 g einer anionischen Kartoffelstärke (DS-Wert = 0,044) vorgelegt. Unter Rühren wurden 430 g entmineralisiertes Wasser, 2,30 g einer α-Amylase (1 %ig) und 1,02 g Calciumacetat-Hydrat 25 %ig zugegeben. Das Gemisch wurde auf 85 °C erhitzt und 30 min bei dieser Temperatur gerührt. Danach fügte man 9,22 g Eisessig und 2,60 g Eisen(II)sulfat Heptahydrat 10 %ig zu und gab dann 4,9 g einer 18 %igen Wasserstoffperoxidlösung zu.

Danach startete man einen Monomerzulauf bestehend aus 124,7 g entmineralisiertem Wasser, 0,20 g eines Gemisches des Na-Salzes von Alkansulfonaten mit einer mittleren Kettenlänge von C₁₅ (40 %ig), 2,3 g tert.-Dodecylmercaptan, 84,64 g Styrol, 42,32 g Ethylhexylacrylat und 42,32 g tert.-Butylacrylat. Die Zulaufdauer betrug 90 min. Gleichzeitig startete man einen Zulauf von 39,6 g 18 %iger Wasserstoffperoxidlösung über einen Zeitraum von 120 min. Das Gemisch wurde 30 min nachpolymerisiert und dann auf 50 °C abgekühlt. Dann gab man 2,19 g tert-Butylhydroperoxid 10 %ig zu, rührte es weitere 30 min und kühlte es danach auf 30 °C ab. Dann fügte man 28,94 g NaOH 25 %ig und 100 ml Wasser zu, wodurch die Dispersion neutral gestellt wurde.

Man erhielt eine feinteilige Polymerdispersion mit einem Feststoffgehalt von 25,47 Gew.-% und einem LD-Wert (0,1 %) von 83 %. Die mittlere Teilchengröße betrug 98 nm.

### Vergleichsbeispiel B, entsprechend Beispiel 1 aus WO 02/14393 A1

In einem Polymerisationsgefäß, das mit Rührer, Rückflusskühler, Dosiervorrichtungen und Einrichtung zum Arbeiten unter Stickstoffatmosphäre ausgestattet war, wurden 144 g einer oxidativ abgebauten Stärke mit einem COO⁻-Substitutionsgrad von 0,03-0,04 und einem K-Wert von 34 (bestimmt nach DIN 53726) (Amylex® 15 der Firma Südstärke) und 298 g Wasser vorgelegt und unter Rühren in 25 min auf 85 °C erwärmt. Dann gab man 1,6 g einer 25 gew.-%igen wässrigen Calciumacetatlösung und 10 g einer 1 gew.-%igen handelsüblichen Enzymlösung (α-Amylase, Termamyl^{®} 120L der Firma Novo Nordisk) zu. Nach 30 Minuten wurde der enzymatische Stärkeabbau durch Zugabe von 16 g Eisessig abgestoppt. Man gab außerdem 32 g einer 1 gew.-%igen wässrigen Eisen(II)sulfatlösung zu.

Die Temperatur der Reaktionsmischung wurde auf 85 °C gehalten. Bei dieser Temperatur wurde innerhalb von 90 Minuten eine Mischung aus 100 g Wasser, 5 g einer 4 gew.-%igen Emulgatorlösung (Na-C₁₄-C₁₅-alkylsulfonate, Emulgator K30 der Firma Bayer AG), 84 g n-Butylacrylat und 196 g Styrol hinzugegeben. Gleichzeitig mit dem Monomerzulauf begann man den Initiatorzulauf. Innerhalb der ersten 30 Minuten wurden 40 g einer 30 gew.-%igen Wasserstoffperoxidlösung zugegeben. Anschließend wurden in 75 Minuten 13 g einer 30 gew-%igen Wasserstoffperoxidlösung zugegeben. Nachdem die gesamte Monomermenge zudosiert worden war, wurde die Temperatur bis zum Ende des Initiatorzulaufs auf Polymerisationstemperatur gehalten. Anschlieβend wurde auf Raumtemperatur abgekühlt und ein pH-Wert der Dispersion von 5 eingestellt.

Man erhielt eine Dispersion mit einem Feststoffgehalt von 42 Gew.-%, einem LD-Wert von 93 % und einem Teilchendurchmesser von 88 nm.

### Vergleichsbeispiel C, entsprechend Vergleichsbeispiel 2 aus WO 02/14393 A1

In einem Polymerisationsgefäß, das mit Rührer, Rückflusskühler, Dosiervorrichtungen und Einrichtung zum Arbeiten unter Stickstoffatmosphäre ausgestattet war, wurden 144,5 g einer oxidativ abgebauten Stärke mit einem COO⁻-Substitutionsgrad von 0,03-0,04 und einem K-Wert von 34 (bestimmt nach DIN 53726) (Amylex^{®} 15 der Firma Südstärke) und 330 g Wasser vorgelegt und unter Rühren in 25 min auf 85 °C erwärmt. Dann gab man 1,6 g einer 25 gew.-%igen wässrigen Calciumacetatlösung und 20 g einer 1 gew.-%igen handelsüblichen Enzymlösung (α-Amylase, Termamyl^{®} 120L der Firma Novo Nordisk) zu. Nach 30 Minuten wurde der enzymatische Stärkeabbau durch Zugabe von 16 g Eisessig abgestoppt. Man gab außerdem 32 g einer 1 gew.-%igen wässrigen Eisen(II)sulfatlösung zu.

Die Temperatur der Reaktionsmischung wurde auf 85 °C gehalten. Bei dieser Temperatur wurde innerhalb von 90 Minuten eine Mischung aus 100 g Wasser, 5 g einer 4 gew.-%igen Emulgatorlösung (Na-C₁₄-C₁₅-alkylsulfonate, Emulgator K30 der Firma Bayer AG), 84 g n-Butylacrylat und 196 g Styrol hinzugegeben. Gleichzeitig mit dem Monomerzulauf begann der Initiatorzulauf. Man gab 13 g einer 30 gew.-%igen Wasserstoffperoxidlösung in 90 Minuten zu. Nach Ende der Monomeren-Zugabe wurde die Temperatur bis zum Ende des Initiatorzulaufs auf Polymerisationstemperatur gehalten. Anschließend wurde auf Raumtemperatur abgekühlt und ein pH-Wert der Dispersion von 5 eingestellt.

Man erhielt eine Dispersion mit einem Feststoffgehalt von 43,5 Gew.-%, einem LD-Wert von 90 % und einem Teilchendurchmesser von 119 nm.

### Vergleichsbeispiel D, entsprechend Beispiel 9 aus WO 99/42490 A1

In einem 21-Planschilffkolben mit Rührer und Mantelheizung wurden unter Stickstoff 109,2 g oxidativ abgebaute Kartoffelstärke (Perfectamyl^{®} A 4692 der Firma Avebe) in 1062 g vollentsalztem Wasser dispergiert und die Stärke unter Rühren durch Erwärmen auf 86 °C gelöst. Nacheinander wurden 23,2 g einer 1 %igen Eisen(II)sulfatlösung und 71,4 g einer 3 %igen Wasserstoffperoxid-Lösung zugegeben, anschließend rührte man für 15 min bei 86 °C. Danach dosierte man parallel und mit konstanter Dosiergeschwindigkeit innerhalb von 90 min die folgenden zwei Dosierlösungen zu: 1) Monomermischung aus 145,6 g Styrol, 102,8 g n-Butylacrylat und 85,6 g Methylmethacrylat, sowie 2) 97,4 g einer 3 %igen Wasserstoffperoxid-Lösung. Nach Ende der Dosierung wurde 15 min bei 86 °C nachgerührt und anschließend durch Zugabe von 2 g t-Butylhydroperoxid nachaktiviert. Nach weiteren 60 min Nachrührzeit bei 86 °C wurde die Dispersion auf Raumtemperatur abgekühlt, mit 10 g einer 10 %igen Lösung von Ethylendiamintetraacetat (als Tetranatriumsalz) versetzt und mit 11,4 g einer 10 %igen Natronlauge auf pH 6.5 gestellt.

Man filtrierte über einen Polyamid-Filter mit Maschenweite 100 µm und erhielt eine feinteilige Dispersion mit einem Feststoffgehalt von 25,0 %. Die Extinktion einer daraus hergestellten 2,5 %igen Lösung betrug 0,884 (660 nm, 1 cm-Küvette).

### Vergleichsbeispiel E, entsprechend Beispiel 1 aus WO 99/42490 A1

In einem 21-Planschliffkolben mit Rührer, Rückflusskühler und Mantelheizung wurden unter Stickstoff 124,5 g oxidativ abgebaute Kartoffelstärke (Perfectamyl^{®} A 4692 der Firma Avebe) in 985 g entionisiertem Wasser dispergiert und durch Erwärmen auf 86 °C gelöst. Nacheinander gab man 42,7 g einer 1 %igen Eisen(II)sulfatlösung sowie 166 g einer 3 %igen Wasserstoffperoxid-Lösung zu und rührte 15 min bei 86 °C. Nach 15 min dosierte man gleichzeitig aber getrennt mit konstanter Dosiergeschwindigkeit innerhalb von 90 min bei 86 °C die folgenden Dosierlösungen zu: 1) eine Mischung aus 106,6 g Styrol, 80,3 g n-Butylacrylat und 80,3 g t-Butylacrylat, sowie 2) 93,7 g einer 3 %igen Wasserstoffperoxid-Lösung. Nach Beendigung der Dosierung rührte man weitere 15 min bei 86 °C und gab dann zur Nachaktivierung 2 g t-Butylhydroperoxid zu. Nach weiteren 60 min bei 86 °C kühlte man auf Raumtemperatur ab, gab 10 g einer 10 %igen Lösung von Ethylendiamintetraessigsäure als Tetranatriumsalz zu und stellte mit 13 g einer 10 %igen Natronlauge einen pH-Wert von 6.5 ein.

Man filtrierte über ein 100 µm Filtertuch und erhielt eine feinteilige Dispersion mit einem Feststoffgehalt von 25,0 %. Die feinteilige Dispersion wies einen Restmonomergehalt von 80 mg/kg Styrol, 90 mg/kg n-Butylacrylat sowie 50 mg/kg t-Butylacrylat auf. Der Trübungswert einer auf 2,5 % verdünnten Dispersion betrug 0,63 (660 nm, 1 cm Küvette). Die Teilchengröße betrug 74,5 nm (bestimmt durch Laserkorrelationsspektroskopie wie in WO 99/42490 A1 beschrieben).

### Anwendungstechnische Prüfungen der nach den Beispielen und den Vergleichsbeispielen erhaltenen Polymerdispersionen

Eine wässrige Lösung einer abgebauten Maisstärke wurde auf die gewünschte Konzentration eingestellt. Zu der Stärkelösung wurden dann die zu prüfenden Dispersionen der Beispiele und Vergleichsbeispiel dosiert, so dass die Leimpressenflotte 100 g/l einer abgebauten Maisstärke sowie 1 - 3 g/l der jeweiligen Dispersion enthielt. Die Mischung aus Stärkelösung und Polymerdispersion wurde anschließend mittels einer Leimpresse auf ein Papier mit einer Grammatur von 80 g/m², welches in Masse mit AKD (Alkydiketen) schwach vorgeleimt war, bei einer Temperatur von 50 °C aufgetragen. Die Präparationsaufnahme lag im Bereich von ca. 45 %. Anschließend wurden die so behandelten Papiere mittels Kontakttrocknung bei 90 °C getrocknet, 24 h bei 50 % Luftfeuchte klimatisiert und dann den Prüfungen unterzogen.

Als Testpapier diente ein in der Masse mit AKD schwach vorgeleimtes Papier, welches folgende Zusammensetzung hatte: Faserzusammensetzung (80 % gebleichter Birkensulfat-Zellstoff und 20 % gebleichter Kiefernsulfat-Zellstoff) mit einem Füllstoffgehalt von 19 % (Hydrocarb^{®} 60ME der Firma Omya)

Zur Bestimmung des Leimungsgrades der oberflächengeleimten Papiere wurde der Cobb₆₀-Wert nach DIN EN 20 535 bestimmt. Als Cobb₆₀-Wert ist die Wasseraufnahme des Papierblattes in g/m² nach einem Kontakt mit Wasser und einer Kontaktzeit von 60 s definiert. Je niedriger der Cobb₆₀-Wert, desto besser ist die Leimungswirkung der eingesetzten Dispersion. Der HST-Wert wurde nach dem Hercules Sizing Test gemäß Tappi Norm T 530 ermittelt. Je höher der HST-Wert, desto besser ist die Leimungswirkung der eingesetzten Dispersion. Die Ergebnisse der Prüfungen sind in Tabelle 1 zusammengefasst.

**Tabelle 1: Ergebnisse der anwendungstechnischen Prüfungen**

| | Cobb₆₀-Wert [g/m²] | | | HST-Wert [s] | | |
|---|---|---|---|---|---|---|
| Auftragsmenge [g/l] | 1 | 2 | 3 | 1 | 2 | 3 |
| Beispiel 1 | 69 | 41 | 27 | 11 | 81 | 1411 |
| Vergleichsbeispiel 1 | 74 | 57 | 33 | 3 | 26 | 160 |
| Beispiel 2 | 70 | 37 | 26 | 14 | 92 | 139 |
| Vergleichsbeispiel 2 | 79 | 67 | 56 | 4 | 16 | 67 |
| Beispiel 3 | 66 | 30 | 26 | 22 | 108 | 139 |
| Vergleichsbeispiel 3 | 77 | 59 | 28 | 7 | 38 | 88 |
| Beispiel 4 | 62 | 27 | 25 | 40 | 110 | 153 |
| Vergleichsbeispiel 4 | 72 | 51 | 30 | 5 | 51 | 121 |
| Beispiel 5 | 58 | 30 | 23 | 36 | 116 | 157 |
| Vergleichsbeispiel 5 | 62 | 32 | 25 | 21 | 106 | 153 |
| Beispiel 6 | 66 | 56 | 31 | 10 | 40 | 90 |
| Vergleichsbeispiel 6 | 68 | 62 | 53 | 5 | 18 | 53 |
| Beispiel 7 | 62 | 33 | 26 | 19 | 88 | 121 |
| Vergleichsbeispiel 7 | 64 | 56 | 32 | 8 | 40 | 115 |
| Beispiel 8 | 63 | 29 | 26 | 18 | 104 | 135 |
| Vergleichsbeispiel 8 | 61 | 33 | 27 | 17 | 78 | 128 |
| Beispiel 9 | 81 | 47 | 38 | 47 | 109 | 156 |
| Vergleichsbeispiel 9 | 85 | 58 | 40 | 31 | 54 | 77 |
| Beispiel 10 | 73 | 49 | 37 | 56 | 96 | 174 |
| Vergleichsbeispiel 10 | 67 | 59 | 39 | 55 | 85 | 152 |
| Vergleichsbeispiel A | 73 | 39 | 32 | 10 | 70 | 95 |
| Vergleichsbeispiel B | 73 | 62 | 37 | 4 | 18 | 73 |
| Vergleichsbeispiel C | 78 | 74 | 71 | 2 | 4 | 13 |
| Vergleichsbeispiel D | 74 | 50 | 34 | 7 | 52 | 120 |
| Vergleichsbeispiel E | 70 | 37 | 31 | 13 | 91 | 139 |

Aus den erfindungsgemäßen Beispielen wird deutlich, dass im Vergleich zu den entsprechenden Vergleichsbeispielen ohne Terpen-haltigen Polymerisationsregler sowohl ein deutlich geringerer Cobb₆₀-Wert als auch ein höherer HST-Wert erzielt wird und die damit hergestellten Papiere dadurch eine verbesserte Leimungswirkung zeigen. Dieser Effekt steigt signifikant mit der Auftragsmenge der jeweiligen Polymerdispersion. Auch im Vergleich zu den aus dem Stand der Technik bekannten Polymerdispersionen wird eine deutlich verbesserte Leimungswirkung erzielt.

## Patentansprüche

1. Feinteilige, stärkehaltige Polymerdispersionen, die erhältlich sind durch radikalisch initiierte Emulsionspolymerisation von ethylenisch ungesättigten Monomeren in Gegenwart mindestens eines Redoxinitiators und Stärke, **dadurch gekennzeichnet, dass** man als ethylenisch ungesättigte Monomere
(a) 30 bis 60 Gew.-% mindestens eines gegebenenfalls substituierten Styrols,
(b) 1 bis 60 Gew.-% mindestens eines Acrylsäure-C₁-C₁₂-alkylesters und/oder Methacrylsäure-C₁-C₁₂-alkylesters,
(c) 0 bis 10 Gew.-% mindestens eines anderen ethylenisch ungesättigten copolymerisierbaren Monomers,
und als Stärke
(d) 15 bis 40 Gew.-% mindestens einer abgebauten Stärke einsetzt, die eine Molmasse M_{w} von 1 000 bis 65 000 g/mol hat,
wobei die Summer (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, mindestens eines Terpen-haltigen Polymerisationsreglers durchgeführt wird.

2. Feinteilige, stärkehaltige Polymerdispersion nach Anspruch 1, **dadurch gekennzeichnet, dass** man als ethylenisch ungesättigte Monomere
(a) 30 bis 60 Gew.-% mindestens eines gegebenenfalls substituierten Styrols,
(b) 1 bis 29 Gew.-% mindestens eines Acrylsäure-C₁-C₁₂-alkylesters und/oder Methacrylsäure-C₁-C₁₂-alkylesters,
(c) 0,1 bis 5 Gew.-% mindestens eines anderen ethylenisch ungesättigten copolymerisierbaren Monomers,
und als Stärke
(d) 25 bis 35 Gew.-% mindestens einer abgebauten Stärke einsetzt, die eine Molmasse M_{w} von 1 000 bis 65 000 g/mol hat,
wobei die Summer (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, mindestens eines Terpen-haltigen Polymerisationsreglers durchgeführt wird.

3. Feinteilige, stärkehaltige Polymerdispersion nach Anspruch 1 oder 2, **dadurch gekennzeichnet, dass** man als ethylenisch ungesättigte Monomere
(a) 40 bis 50 Gew.-% mindestens eines gegebenenfalls substituierten Styrols,
(b) 5 bis 25 Gew.-% eines Acrylsäure-C₁-C₁₂-alkylesters oder Methacrylsäure-C₁-C₁₂-alkylesters,
(c) 0,1 bis 5 Gew.-% mindestens eines anderen ethylenisch ungesättigten copolymerisierbaren Monomers,
und als Stärke
(d) 25 bis 35 Gew.-% mindestens einer abgebauten Stärke einsetzt, die eine Molmasse M_{w} von 2 500 bis 35 000 g/mol hat,
wobei die Summer (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, mindestens eines Terpen-haltigen Polymerisationsreglers durchgeführt wird.

4. Feinteilige, stärkehaltige Polymerdispersion nach einem der vorstehenden Ansprüche, **dadurch gekennzeichnet, dass** man als ethylenisch ungesättigte Monomere
(a) 40 bis 50 Gew.-% mindestens eines gegebenenfalls substituierten Styrols,
(b) 5 bis 25 Gew.-% eines Acrylsäure-C₁-C₁₂-alkylesters,
(c) 0,1 bis 5 Gew.-% mindestens eines anderen ethylenisch ungesättigten copolymerisierbaren Monomers,
und als Stärke
(d) 25 bis 35 Gew.-% einer abgebauten anionischen Stärke einsetzt, die eine Molmasse M_{w} von 2 500 bis 35 000 g/mol hat,
wobei die Summer (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, mindestens eines monocyclischen Monoterpens als Polymerisationsreglers durchgeführt wird.

5. Feinteilige, stärkehaltige Polymerdispersion nach einem der vorstehenden Ansprüche, **dadurch gekennzeichnet, dass** man als ethylenisch ungesättigte Monomere
(a) 40 bis 50 Gew.-% mindestens eines gegebenenfalls substituierten Styrols,
(b) 5 bis 25 Gew.-% eines Acrylsäure-C₁-C₄-alkylesters,
(c) 0,1 bis 5 Gew.-% mindestens eines anderen ethylenisch ungesättigten copolymerisierbaren Monomers,
und als Stärke
(d) 25 bis 35 Gew.-% einer abgebauten anionischen Stärke einsetzt, die eine Molmasse M_{w} von 2 500 bis 35 000 g/mol hat,
wobei die Summer (a) + (b) + (c) + (d) = 100 % beträgt und sich auf den Gesamtfeststoffgehalt bezieht, und wobei die Polymerisation in Gegenwart von mindestens 0,01 Gew.-%, bezogen auf die eingesetzten Monomeren, Terpinolen als Polymerisationsreglers durchgeführt wird.

6. Feinteilige, stärkehaltige Polymerdispersion nach einem der vorstehenden Ansprüche, **dadurch gekennzeichnet, dass** man die Terpen-haltigen Polymerisationsregler in einer Menge von 0,01 bis 10 Gew.-%, bezogen auf die Monomere, einsetzt.

7. Feinteilige, stärkehaltige Polymerdispersion nach einem der vorstehenden Ansprüche, **dadurch gekennzeichnet, dass** man die Terpen-haltigen Polymerisationsregler in einer Menge von 0,05 bis 5 Gew.-%, bezogen auf die Monomere, einsetzt.

8. Verfahren zur Herstellung von feinteiligen, stärkehaltigen Polymerdispersionen nach einem der Ansprüche 1 bis 7, **dadurch gekennzeichnet, dass** man
(a) 30 bis 60 Gew.-% mindestens eines gegebenenfalls substituierten Styrols,
(b) 1 bis 60 Gew.-% mindestens eines Acrylsäure-C₁-C₁₂-alkylesters und/oder Methacrylsäure-C₁-C₁₂-alkylesters,
(c) 0 bis 10 Gew.-% mindestens eines anderen ethylenisch ungesättigten copolymerisierbaren Monomers, und
(d) 15 bis 40 Gew.-% mindestens einer abgebauten Stärke, die eine Molmasse M_{w} von 1 000 bis 65 000 g/mol hat,
wobei die Summer (a) + (b) + (c) + (d) = 100 % beträgt und sich auf den Gesamtfeststoffgehalt bezieht, in Gegenwart eines Redoxinitiators in einem wässrigen Medium polymerisiert und die Polymerisation in Gegenwart von mindestens 0,01 Gew.-%, bezogen auf die eingesetzten Monomeren, mindestens eines Terpen-haltigen Polymerisationsreglers durchgeführt wird.

9. Verfahren nach Anspruch 8, **dadurch gekennzeichnet, dass** man die Polymerisation in Gegenwart von 0,05 bis 5 Gew.-% mindestens eines monocyclischen Monoterpens als Polymerisationsreglers durchführt.

10. Verfahren nach Anspruch 9, **dadurch gekennzeichnet, dass** man die Polymerisation in Gegenwart von 0,05 bis 5 Gew.-% Terpinolen als Polymerisationsreglers durchführt.

11. Verfahren nach einem der Ansprüche 8 bis 10, **dadurch gekennzeichnet, dass** man der Polymerdispersion nach Beendigung der Hauptpolymerisation einen Initiator aus der Gruppe Wasserstoffperoxid, Peroxide, Hydroperoxide und/oder Azostarter zusetzt und eine Nachpolymerisation durchführt.

12. Verfahren nach Anspruch 11, **dadurch gekennzeichnet, dass** man der Polymerdispersion zur Nachpolymerisation tert.-Butylhydroperoxid zusetzt.

13. Verwendung der feinteiligen, stärkehaltigen Polymerdispersion nach den Ansprüchen 1 bis 7 als Leimungsmittel für Papier, Pappe und Karton.

## Claims

1. A finely divided, starch-containing polymer dispersion which is obtainable by free radical emulsion polymerization of ethylenically unsaturated monomers in the presence of at least one redox initiator and starch, wherein
(a) from 30 to 60% by weight of at least one optionally substituted styrene,
(b) from 1 to 60% by weight of at least one C₁-C₁₂-alkyl acrylate and/or C₁-C₁₂-alkyl methacrylate,
(c) from 0 to 10% by weight of at least one other ethylenically unsaturated copolymerizable monomer,
are used as the ethylenically unsaturated monomers and
(d) from 15 to 40% by weight of at least one degraded starch which has a molar mass M_{w} of from 1000 to 65 000 g/mol
are used as the starch,
the sum (a) + (b) + (c) + (d) being 100% and being based on the total solids content, and the polymerization being carried out in the presence of at least 0.01 % by weight, based on the monomers used, of at least one terpene-containing chain-transfer agent.

2. The finely divided, starch-containing polymer dispersion according to claim 1, wherein
(a) from 30 to 60% by weight of at least one optionally substituted styrene,
(b) from 1 to 29% by weight of at least one C₁-C₁₂-alkyl acrylate and/or C₁-C₁₂-alkyl methacrylate,
(c) from 0.1 bis 5% by weight of at least one other ethylenically unsaturated copolymerizable monomer
are used as the ethylenically unsaturated monomers and
(d) from 25 to 35% by weight of at least one degraded starch which has a molar mass M_{w} of from 1000 to 65 000 g/mol
are used as the starch,
the sum (a) + (b) + (c) + (d) being 100 % and being based on the total solids content, and the polymerization being carried out in the presence of at least 0.01 % by weight, based on the monomers used, of at least one terpene-containing chain-transfer agent.

3. The finely divided, starch-containing polymer dispersion according to claim 1 or 2, wherein
(a) from 40 to 50% by weight of at least one optionally substituted styrene,
(b) from 5 to 25% by weight of a C₁-C₁₂-alkyl acrylate or C₁-C₁₂-alkyl methacrylate,
(c) from 0.1 bis 5% by weight of at least one other ethylenically unsaturated copolymerizable monomer
are used as the ethylenically unsaturated monomers and
(d) from 25 to 35% by weight of at least one degraded starch which has a molar mass M_{w} of from 2500 to 35 000 g/mol
are used as the starch,
the sum (a) + (b) + (c) + (d) being 100 % and being based on the total solids content, and the polymerization being carried out in the presence of at least 0.01 % by weight, based on the monomers used, of at least one terpene-containing chain-transfer agent.

4. The finely divided, starch-containing polymer dispersion according to any of the preceding claims, wherein
(a) from 40 to 50% by weight of at least one optionally substituted styrene,
(b) from 5 to 25% by weight of a C₁-C₁₂-alkyl acrylate,
(c) from 0.1 bis 5% by weight of at least one other ethylenically unsaturated copolymerizable monomer
are used as the ethylenically unsaturated monomers and
(d) from 25 to 35% by weight of a degraded anionic starch which has a molar mass M_{w} of from 2500 to 35 000 g/mol
are used as the starch,
the sum (a) + (b) + (c) + (d) being 100 % and being based on the total solids content, and the polymerization being carried out in the presence of at least 0.01 % by weight, based on the monomers used, of at least one monocyclic monoterpene as the chain-transfer agent.

5. The finely divided, starch-containing polymer dispersion according to any of the preceding claims, wherein
(a) from 40 to 50% by weight of at least one optionally substituted styrene,
(b) from 5 to 25% by weight of a C₁-C₄-alkyl acrylate,
(c) from 0.1 bis 5% by weight of at least one other ethylenically unsaturated copolymerizable monomer
are used as the ethylenically unsaturated monomers and
(d) from 25 to 35% by weight of a degraded anionic starch which has a molar mass M_{w} of from 2500 to 35 000 g/mol
are used as the starch,
the sum (a) + (b) + (c) + (d) being 100 % and being based on the total solids content, and the polymerization being carried out in the presence of at least 0.01 % by weight, based on the monomers used, of terpinolene as the chain-transfer agent.

6. The finely divided, starch-containing polymer dispersion according to any of the preceding claims, wherein the terpene-containing chain-transfer agent is used in an amount of from 0.01 to 10% by weight, based on the monomers.

7. The finely divided, starch-containing polymer dispersion according to any of the preceding claims, wherein the terpene-containing chain-transfer agent is used in an amount of from 0.05 to 5% by weight, based on the monomers.

8. A process for the preparation of finely divided, starch-containing polymer dispersions according to any of claims 1 to 7, wherein
(a) from 30 to 60% by weight of at least one optionally substituted styrene,
(b) from 1 to 60% by weight of at least one C₁-C₁₂-alkyl acrylate and/or C₁-C₁₂-alkyl methacrylate,
(c) from 0 to 10% by weight of at least one other ethylenically unsaturated copolymerizable monomer, and
(d) from 15 to 40% by weight of at least one degraded starch which has a molar mass M_{w} of from 1000 to 65 000 g/mol,
the sum (a) + (b) + (c) + (d) being 100% and being based on the total solids content, are polymerized in the presence of a redox initiator in an aqueous medium and the polymerization is carried out in the presence of at least 0.01% by weight, based on the monomers used, of at least one terpene-containing chain-transfer agent.

9. The process according to claim 8, wherein the polymerization is carried out in the presence of from 0.05 to 5% by weight of at least one monocyclic monoterpene as the chain-transfer agent.

10. The process according to claim 9, wherein the polymerization is carried out in the presence of from 0.05 to 5% by weight of terpinolene as the chain-transfer agent.

11. The process according to any of claims 8 to 10, wherein an initiator from the group consisting of hydrogen peroxide, peroxides, hydroperoxides and/or azo initiators is added to the polymer dispersion after the end of the main polymerization, and a postpolymerization is carried out.

12. The process according to claim 11, wherein tert-butyl hydroperoxide is added to the polymer dispersion for the postpolymerization.

13. The use of the finely divided, starch-containing polymer dispersion according to claims 1 to 7 as a size for paper, board and cardboard.

## Revendications

1. Dispersions de polymères finement divisées, contenant de l'amidon, qui peuvent être obtenues par polymérisation en émulsion à amorçage radicalaire de monomères à insaturation éthylénique en présence d'au moins un amorceur redox et d'amidon, **caractérisées en ce qu'**on utilise comme monomères à insaturation éthylénique
(a) 30 à 60 % en poids d'au moins un styrène éventuellement substitué,
(b) 1 à 60 % en poids d'au moins un acrylate d'alkyle en C₁-C₁₂ et/ou méthacrylate d'alkyle en C₁-C₁₂,
(c) 0 à 10 % en poids d'au moins un autre monomère copolymérisable à insaturation éthylénique,
et en tant qu'amidon
(d) 15 à 40 % en poids d'au moins un amidon dégradé qui a une masse moléculaire M_{w} de 1 000 à 65 000 g/mole,
la somme (a) + (b) + (c) + (d) étant égale à 100 % et se rapportant à la teneur totale en matière solide, et la polymérisation étant effectuée en présence d'au moins 0,01 % en poids, par rapport aux monomères utilisés, d'au moins un régulateur de polymérisation contenant un terpène.

2. Dispersion de polymère finement divisée, contenant de l'amidon, selon la revendication 1, **caractérisée en ce qu'**on utilise comme monomères à insaturation éthylénique
(a) 30 à 60 % en poids d'au moins un styrène éventuellement substitué,
(b) 1 à 29 % en poids d'au moins un acrylate d'alkyle en C₁-C₁₂ et/ou méthacrylate d'alkyle en C₁-C₁₂,
(c) 0,1 à 5 % en poids d'au moins un autre monomère copolymérisable à insaturation éthylénique,
et en tant qu'amidon
(d) 25 à 35 % en poids d'au moins un amidon dégradé qui a une masse moléculaire M_{w} de 1 000 à 65 000 g/mole,
la somme (a) + (b) + (c) + (d) étant égale à 100 % et se rapportant à la teneur totale en matière solide, et la polymérisation étant effectuée en présence d'au moins 0,01 % en poids, par rapport aux monomères utilisés, d'au moins un régulateur de polymérisation contenant un terpène.

3. Dispersion de polymère finement divisée, contenant de l'amidon, selon la revendication 1 ou 2, **caractérisée en ce qu'**on utilise comme monomères à insaturation éthylénique
(a) 40 à 50 % en poids d'au moins un styrène éventuellement substitué,
(b) 5 à 25 % en poids d'un acrylate d'alkyle en C₁-C₁₂ ou méthacrylate d' alkyle en C₁-C₁₂,
(c) 0,1 à 5 % en poids d'au moins un autre monomère copolymérisable à insaturation éthylénique,
et en tant qu'amidon
(d) 25 à 35 % en poids d'au moins un amidon dégradé qui a une masse moléculaire M_{w} de 2 500 à 35 000 g/mole,
la somme (a) + (b) + (c) + (d) étant égale à 100 % et se rapportant à la teneur totale en matière solide, et la polymérisation étant effectuée en présence d'au moins 0,01 % en poids, par rapport aux monomères utilisés, d'au moins un régulateur de polymérisation contenant un terpène.

4. Dispersion de polymère finement divisée, contenant de l'amidon, selon l'une quelconque des revendications précédentes, **caractérisée en ce qu'**on utilise comme monomères à insaturation éthylénique
(a) 40 à 50 % en poids d'au moins un styrène éventuellement substitué,
(b) 5 à 25 % en poids d'un acrylate d'alkyle en C₁-C₁₂,
(c) 0,1 à 5 % en poids d'au moins un autre monomère copolymérisable à insaturation éthylénique,
et en tant qu'amidon
(d) 25 à 35 % en poids d'un amidon anionique dégradé qui a une masse moléculaire M_{w} de 2 500 à 35 000 g/mole,
la somme (a) + (b) + (c) + (d) étant égale à 100 % et se rapportant à la teneur totale en matière solide, et la polymérisation étant effectuée en présence d'au moins 0,01 % en poids, par rapport aux monomères utilisés, d'au moins un monoterpène monocyclique en tant que régulateur de polymérisation.

5. Dispersion de polymère finement divisée, contenant de l'amidon, selon l'une quelconque des revendications précédentes, **caractérisée en ce qu'**on utilise comme monomères à insaturation éthylénique
(a) 40 à 50 % en poids d'au moins un styrène éventuellement substitué,
(b) 5 à 25 % en poids d'un acrylate d'alkyle en C₁-C₄,
(c) 0,1 à 5 % en poids d'au moins un autre monomère copolymérisable à insaturation éthylénique,
et en tant qu'amidon
(d) 25 à 35 % en poids d'un amidon anionique dégradé qui a une masse moléculaire M_{w} de 2 500 à 35 000 g/mole,
la somme (a) + (b) + (c) + (d) étant égale à 100 % et se rapportant à la teneur totale en matière solide, et la polymérisation étant effectuée en présence d'au moins 0,01 % en poids, par rapport aux monomères utilisés, de terpinolène en tant que régulateur de polymérisation.

6. Dispersion de polymère finement divisée, contenant de l'amidon, selon l'une quelconque des revendications précédentes, **caractérisée en ce qu'**on utilise le régulateur de polymérisation, contenant un terpène, en une quantité de 0,01 à 10 % en poids, par rapport aux monomères.

7. Dispersion de polymère finement divisée, contenant de l'amidon, selon l'une quelconque des revendications précédentes, **caractérisée en ce qu'**on utilise le régulateur de polymérisation, contenant un terpène, en une quantité de 0,05 à 5 % en poids, par rapport aux monomères.

8. Procédé pour la préparation de dispersions de polymères finement divisées, contenant de l'amidon, selon l'une quelconque des revendications 1 à 7, **caractérisé en ce qu'**on polymérise
(a) 30 à 60 % en poids d'au moins un styrène éventuellement substitué,
(b) 1 à 60 % en poids d'au moins un acrylate d'alkyle en C₁-C₁₂ et/ou méthacrylate d'alkyle en C₁-C₁₂,
(c) 0 à 10 % en poids d'au moins un autre monomère copolymérisable à insaturation éthylénique, et
(d) 15 à 40 % en poids d'au moins un amidon dégradé qui a une masse moléculaire M_{w} de 1 000 à 65 000 g/mole,
la somme (a) + (b) + (c) + (d) étant égale à 100 % et se rapportant à la teneur totale en matière solide, en présence d'un amorceur redox, dans un milieu aqueux et on effectue la polymérisation en présence d'au moins 0,01 % en poids, par rapport aux monomères utilisés, d'au moins un régulateur de polymérisation contenant un terpène.

9. Procédé selon la revendication 8, **caractérisé en ce qu'**on effectue la polymérisation en présence de 0,05 à 5 % en poids d'au moins un monoterpène monocyclique en tant que régulateur de polymérisation.

10. Procédé selon la revendication 9, **caractérisé en ce qu'**on effectue la polymérisation en présence de 0,05 à 5 % en poids de terpinolène en tant que régulateur de polymérisation.

11. Procédé selon l'une quelconque des revendications 8 à 10, **caractérisé en ce qu'**une fois terminée la polymérisation principale on ajoute à la dispersion de polymère un amorceur choisi dans le groupe constitué par le peroxyde d'hydrogène, des peroxydes, hydroperoxydes et/ou des amorceurs azo et on effectue une post-polymérisation.

12. Procédé selon la revendication 11, **caractérisé en ce que** pour la post-polymérisation on ajoute de l'hydroperoxyde de tert-butyle à la dispersion de polymère.

13. Utilisation de la dispersion de polymère finement divisée, contenant de l'amidon, selon les revendications 1 à 7, en tant qu'agent de collage pour papier, carton et carton fort.
